# EUROPEAN PATENT APPLICATION

(11) **EP 4 530 116 A1**
(43) Date of publication of application: **02.04.2025**
(21) Application number: 22948626.1
(22) Date of filing: 30.06.2022
(51) Int. Cl.: B60L 7/18, B60L 7/10, B60L 7/26, B60L 7/24

(54) **BRAKING METHOD AND APPARATUS, AND ELECTRONIC DEVICE, VEHICLE AND MEDIUM**

(71) Applicant: Shenzhen Yinwang Intelligent Technologies Co., Ltd., Shenzhen, Guangdong 518129 (CN)
(72) Inventor: WENG, Ziyu, Shenzhen, Guangdong 518129 (CN); LING, Mingze, Shenzhen, Guangdong 518129 (CN); WANG, Guangyi, Shenzhen, Guangdong 518129 (CN)
(74) Representative: MERH-IP Matias Erny Reichl Hoffmann Patentanwälte PartG mbB
(86) International application number: PCT/CN2022/103153
(87) International publication number: WO 2024/000524

(57) **Abstract**

A braking method is provided, including: obtaining a braking torque of a wheel; and determining a change amount of an energy regeneration braking torque and a change amount of a friction braking torque based on a change amount of the braking torque of the wheel. The change amount of the braking torque is equal to a sum of the change amount of the energy regeneration braking torque and the change amount of the friction braking torque. According to the method, cooperative control of friction braking and energy regeneration braking in an emergency braking process is implemented, energy regeneration can be fully used to quickly respond to a braking requirement, a control response speed is faster, an energy regeneration rate is higher, and vehicle stability during emergency braking is enhanced. An apparatus for implementing the method, an electronic device, a vehicle, and a storage medium storing the method are further provided.

## Description

### TECHNICAL FIELD

The present invention relates to the field of braking technologies, and specifically, to a braking method and apparatus, an electronic device, a vehicle, and a medium.

### BACKGROUND

With development of a new energy technology, some pure-electric vehicles or hybrid vehicles use a cooperative regenerative braking system (CRBS). When a driver releases a drive pedal or presses a brake pedal, the system regenerates kinetic energy lost during a braking process of the vehicle. A drive motor generates electricity, so that the regenerated energy is stored in a power battery for subsequent acceleration travel, to increase endurance mileage.

In an existing energy regeneration strategy, an anti-lock braking system (ABS) or another control system interferes with a signal of a braking torque. Some cooperation methods are for attempting to take into account energy regeneration while ensuring vehicle stability. However, in these methods, a difference between the drive motor executing an energy regeneration torque and a brake component executing a friction torque is not considered. Consequently, it is difficult to control vehicle stability, and energy regeneration efficiency is low.

### SUMMARY

Embodiments of this application provide a vehicle braking solution. In this solution, characteristics of a drive motor executing an energy regeneration torque and a brake component executing a friction torque are considered, and a braking-required torque is allocated to the energy regeneration braking torque and the friction braking torque in an optimal manner, to provide cooperative control of wheel anti-lock and energy regeneration.

According to a first aspect of this application, a vehicle braking method is provided. The method includes: obtaining a braking-required torque of a wheel; and determining a change amount of an energy regeneration braking torque and a change amount of a friction braking torque of the wheel based on a change amount of the braking-required torque of the wheel. The change amount of the braking-required torque is a sum of the change amount of the energy regeneration braking torque and the change amount of the friction braking torque. Based on this manner, cooperative control of friction braking and energy regeneration braking in an emergency braking process can be implemented, and energy regeneration can be fully used to quickly respond to a braking requirement. This method is different from a conventional scheme in that energy regeneration efficiency is higher, a control response is faster, and vehicle body stability during emergency braking of a vehicle is enhanced.

In some embodiments of the first aspect, the determining a change amount of an energy regeneration braking torque and a change amount of a friction braking torque of the wheel may include: if a change rate of the braking-required torque is greater than or equal to a threshold change rate, determining the change amount of the energy regeneration braking torque and the change amount of the friction braking torque based on a first preset ratio between the change amount of the energy regeneration braking torque and the change amount of the friction braking torque. Based on this manner, when the braking-required torque fluctuates rapidly, friction braking and energy regeneration can be balanced and cooperated. A torque response of a drive motor and a hydraulic pressure relief response of a friction braking actuator are balanced in a capability to decrease a braking torque. Therefore, when the required torque decreases significantly, energy regeneration and friction braking can be well cooperated. When the braking-required torque increases rapidly, the drive motor and a friction brake can fully execute, to cooperate to rapidly increase the braking torque.

In some embodiments of the first aspect, the determining a change amount of an energy regeneration braking torque and a change amount of a friction braking torque of the wheel may include: if a vehicle speed is greater than or equal to a threshold vehicle speed and a wheel speed is greater than or equal to a threshold wheel speed, determining the change amount of the energy regeneration braking torque and the change amount of the friction braking torque based on a second preset ratio between the change amount of the energy regeneration braking torque and the change amount of the friction braking torque. The second preset ratio is greater than the first preset ratio. Based on this manner, in a condition that the vehicle speed or the wheel speed is high, and a rotational speed of the drive motor is high, which is conducive to energy regeneration, energy regeneration is preferred for braking.

In some embodiments of the first aspect, the determining a change amount of an energy regeneration braking torque and a change amount of a friction braking torque of the wheel may include: if a road adhesion coefficient is greater than or equal to a threshold coefficient, determining the change amount of the energy regeneration braking torque and the change amount of the friction braking torque based on a third preset ratio between the change amount of the energy regeneration braking torque and the change amount of the friction braking torque. The third preset ratio is less than the first preset ratio. Based on this manner, friction braking is preferred when an energy regeneration condition is poor and a road condition is good.

In some embodiments of the first aspect, the obtaining a braking-required torque of a wheel includes obtaining the braking-required torque from an anti-lock system (ABS). The method may further include: before the ABS is started, making the energy regeneration braking torque of the wheel less than an upper limit value of the energy regeneration torque. Based on this manner, available space for the energy regeneration braking torque can be reserved, so that the braking-required torque that fluctuates significantly can be satisfied.

In some embodiments, the upper limit value is determined based on current maximum charging power of a vehicle battery and a current maximum regeneration torque of the motor. Based on this manner, the maximum energy regeneration torque can be determined accurately and in real time, to ensure braking reliability.

In some embodiments of the first aspect, the method may further include: in response to that the vehicle exits an emergency braking state, decreasing the friction braking torque. In some embodiments, the method may further include: after the friction braking torque is decreased to zero, controlling the energy regeneration braking torque to control braking or coasting of the vehicle. Based on this manner, the vehicle can smoothly exit emergency braking, and a jolting sensation is avoided.

In some embodiments of the first aspect, the method may further include: in response to that a decrement of travel of a brake pedal within preset time is greater than a preset value, travel of a brake pedal is less than preset travel, or an indication of ending of autonomous emergency braking is received, determining that the vehicle exits the emergency braking state. Based on this manner, a change of a vehicle status can be determined in time, to help maintain vehicle stability during braking.

In some embodiments of the first aspect, the method may be performed by at least one of an intelligent brake controller of the vehicle, a drive motor controller of the vehicle, or a vehicle control unit of the vehicle. When the intelligent brake controller of the vehicle executes the method, a delay of obtaining a braking requirement through a communication line is low, and a braking response can be made in time.

When the drive motor controller of the vehicle executes the method, a response delay of a drive motor torque can be further reduced, and the friction braking torque is less sensitive to a communication delay than the drive motor torque. In this way, impact of a communication time delay on overall control effect is further reduced, better control effect is obtained, and vehicle stability is improved.

When the vehicle control unit of the vehicle executes the method, because the vehicle control unit of the vehicle has higher computing power, a control periodicity can be shortened, so that the brake controller and the drive motor controller can have a same communication time delay in a same communication line. In this way, corresponding time delays are uniformly compensated in a control process, to obtain better control effect and improve vehicle stability.

According to a second aspect of this application, a vehicle braking method is further provided. The method includes: in response to emergency braking of a vehicle, increasing a friction braking torque of a wheel when an energy regeneration braking torque of the wheel reaches an upper limit value of the energy regeneration braking torque; and in response to a decrease in a growth rate of a braking-required torque of the wheel, decreasing the energy regeneration braking torque from the upper limit value and continuing to increase the friction braking torque. A sum of the energy regeneration braking torque and the friction braking torque is the braking-required torque. Based on this manner, available space for the energy regeneration braking torque can be reserved, so that the braking-required torque that fluctuates significantly can be satisfied.

In some embodiments of the second aspect, the method may further include: determining the upper limit value of the energy regeneration braking torque based on current maximum charging power of a vehicle battery and a current maximum regeneration torque of a motor. Based on this manner, the maximum energy regeneration torque can be determined accurately and in real time, to ensure braking reliability.

In some embodiments of the second aspect, the method may further include: in response to that an increment of travel of a brake pedal within preset time is greater than a preset value, travel of a brake pedal is greater than or equal to preset travel, or an indication of enabling of autonomous emergency braking is received, determining that the vehicle undergoes emergency braking. Based on this manner, a change of a vehicle status can be determined in time, to help maintain vehicle stability.

In some embodiments of the second aspect, the method may further include: based on the energy regeneration braking torque of the wheel and an energy regeneration braking torque of another wheel, determining an energy regeneration braking torque executed by the motor; and based on the braking-required torque of the wheel and the energy regeneration braking torque executed by the motor, determining the friction braking torque for execution by a friction disc. In this way, the executable energy regeneration torque and the executable friction braking torque can be determined from the energy regeneration braking torques of the set of wheels, so that the drive motor and a friction actuator complete actual braking.

In some embodiments of the second aspect, the decreasing the energy regeneration braking torque includes: decreasing the energy regeneration braking torque to a preset torque. The preset torque is determined based on at least one of the upper limit value of the energy regeneration braking torque and the braking-required torque. Based on this manner, the energy regeneration braking torque can be maintained within a preferred interval, so that a change of the braking-required torque can be more flexibly satisfied.

In some embodiments of the second aspect, the method may further include: in response to that the vehicle exits emergency braking, decreasing the friction braking torque while the energy regeneration braking torque remains substantially unchanged. In some embodiments, after the friction braking torque is decreased to zero, the energy regeneration braking torque is controlled to control braking or coasting of the vehicle. Based on this manner, the vehicle can smoothly exit emergency braking, and a jolting sensation is avoided.

In some embodiments of the second aspect, the method may further include: in response to that a decrement of the travel of the brake pedal within the preset time is greater than the preset value, the travel of the brake pedal is less than the preset travel, or an indication of ending of autonomous emergency braking is received, determining that the vehicle exits an emergency braking state. Based on this manner, the change of the vehicle status can be determined in time, to help maintain vehicle stability during braking.

In some embodiments of the second aspect, the method may further include: in response to start of an anti-lock system (ABS) of the vehicle, obtaining the braking-required torque of the wheel from the ABS; and determining a change amount of the energy regeneration braking torque and a change amount of the friction braking torque of the wheel based on a change amount of the braking-required torque of the wheel. The change amount of the braking-required torque is a sum of the change amount of the energy regeneration braking torque and the change amount of the friction braking torque. Based on this manner, cooperative control of friction braking and energy regeneration braking in an emergency braking process can be implemented, and energy regeneration can be fully used to quickly respond to a significantly changed braking requirement.

In some embodiments of the second aspect, the determining a change amount of the energy regeneration braking torque and a change amount of the friction braking torque of the wheel may include: if a change rate of the braking-required torque is greater than or equal to a threshold change rate, determining the change amount of the energy regeneration braking torque and the change amount of the friction braking torque based on a first preset ratio between the change amount of the energy regeneration braking torque and the change amount of the friction braking torque. Based on this manner, when the braking-required torque fluctuates rapidly, friction braking and energy regeneration can be balanced and cooperated. A torque response of the drive motor and a hydraulic pressure relief response of the friction braking actuator are balanced in a capability to decrease a braking torque. Therefore, when the required torque decreases significantly, energy regeneration and friction braking can be well cooperated. When the braking-required torque increases significantly, the drive motor and a friction brake can fully execute, to cooperate to rapidly increase the braking torque.

In some embodiments of the second aspect, the determining a change amount of the energy regeneration braking torque and a change amount of the friction braking torque of the wheel may further include: if a vehicle speed is greater than or equal to a threshold vehicle speed and a wheel speed is greater than or equal to a threshold wheel speed, determining the change amount of the energy regeneration braking torque and the change amount of the friction braking torque based on a second preset ratio between the change amount of the energy regeneration braking torque and the change amount of the friction braking torque. The second preset ratio is greater than the first preset ratio. Based on this manner, in a condition that the vehicle speed is high, and a rotational speed of the drive motor is high, which is conducive to energy regeneration, energy regeneration is preferred for braking.

In some embodiments of the second aspect, the determining a change amount of the energy regeneration braking torque and a change amount of the friction braking torque of the wheel may further include: if a road adhesion coefficient is greater than or equal to a threshold coefficient, determining the change amount of the energy regeneration braking torque and the change amount of the friction braking torque based on a third preset ratio between the change amount of the energy regeneration braking torque and the change amount of the friction braking torque. The third preset ratio is less than the first preset ratio. Based on this manner, friction braking is preferred when an energy regeneration condition is poor and a road condition is good.

In some embodiments of the second aspect, the method is performed by at least one of the following: an intelligent brake controller of the vehicle, a drive motor controller of the vehicle, or a vehicle control unit of the vehicle.

According to a third aspect of this application, an electronic device is provided. The electronic device includes at least one processing unit and at least one memory. The at least one memory is coupled to the at least one processing unit and stores instructions to be executed by the at least one processing unit. When the instructions are executed by the at least one processing unit, the electronic device is enabled to perform the method according to the first aspect or the second aspect of this application.

According to a fourth aspect of this application, a braking apparatus is provided. The braking apparatus includes a braking requirement obtaining unit. The braking requirement obtaining unit is configured to obtain a braking-required torque of a wheel. The braking apparatus further includes a control unit. The control unit is configured to determine a change amount of an energy regeneration braking torque and a change amount of a friction braking torque of the wheel based on a change amount of the braking-required torque of the wheel. The change amount of the braking-required torque is a sum of the change amount of the energy regeneration braking torque and the change amount of the friction braking torque.

According to a fifth aspect of this application, a braking apparatus is provided. The braking apparatus includes a control unit. The control unit is configured to: in response to emergency braking of a vehicle, increase a friction braking torque of a wheel when an energy regeneration braking torque of the wheel reaches an upper limit value. The control unit is further configured to: in response to a decrease in a growth rate of a braking-required torque of the wheel, decrease the energy regeneration braking torque from the upper limit value and continue to increase the friction braking torque. A sum of the energy regeneration braking torque and the friction braking torque is the braking-required torque. According to a sixth aspect of this application, a vehicle is provided. The vehicle includes the braking apparatus according to the fourth aspect or the fifth aspect of this application.

According to a seventh aspect of this application, a computer-readable storage medium is provided. The computer-readable storage medium stores a computer program. When the computer program is executed by a processor, the method according to the first aspect or the second aspect of this application is implemented.

According to an eighth aspect of this application, a computer program product is provided. The computer program product includes computer-executable instructions. When the computer-executable instructions are executed by a processor, the method according to the first aspect or the second aspect of this application is performed.

It should be understood that the content described in the summary is not intended to limit key or important features of embodiments of this application or limit the scope of this application. Other features of this application are easily understood by using the following descriptions.

### BRIEF DESCRIPTION OF DRAWINGS

The foregoing and other features, advantages, and aspects of embodiments of this application become clearer with reference to the accompanying drawings and the following detailed descriptions. In the accompanying drawings, same or similar reference numerals indicate same or similar elements.
FIG. 1 is a diagram of a vehicle system architecture according to an embodiment of this application;
FIG. 2 is a diagram of a wire-controlled braking and electric drive system according to an embodiment of this application;
FIG. 3 is a diagram of a braking system according to an embodiment of this application;
FIG. 4 is a schematic flowchart of a process for braking a vehicle according to an embodiment of this application;
FIG. 5 is a schematic flowchart of another process for braking a vehicle according to an embodiment of this application;
FIG. 6 is a schematic flowchart of an entry process of cooperative control of an ABS and energy regeneration according to an embodiment of this application;
FIG. 7 is a curve diagram in which a braking torque varies with time in the entry process shown in FIG. 6;
FIG. 8 is a schematic flowchart of an exit process of cooperative control of an AB S and energy regeneration according to an embodiment of this application;
FIG. 9 is a curve diagram in which a braking torque varies with time in the exit process shown in FIG. 8;
FIG. 10 is a schematic flowchart of a process for braking a vehicle according to an embodiment of this application;
FIG. 11 is a schematic flowchart of a process of cooperative control of an ABS and energy regeneration according to an embodiment of this application;
FIG. 12 is a curve diagram of a process of cooperative control, of an ABS and energy regeneration, existing when a vehicle is about to stop according to an embodiment of this application;
FIG. 13 is a curve diagram of a process of cooperative control of an ABS and energy regeneration on a high-adhered road according to an embodiment of this application;
FIG. 14 is a curve diagram of a process of cooperative control of an ABS and energy regeneration on a low-adhered road according to an embodiment of this application;
FIG. 15 is a curve diagram of a process of exiting an ABS midway during braking on a high-adhered road according to an embodiment of this application;
FIG. 16 is a diagram of another braking system according to an embodiment of this application;
FIG. 17 is a diagram of still another braking system according to an embodiment of this application;
FIG. 18 is a block diagram of a braking apparatus according to an embodiment of this application; and
FIG. 19 is a block diagram of another braking apparatus according to an embodiment of this application.

### DESCRIPTION OF EMBODIMENTS

The following describes embodiments of this application in more detail with reference to the accompanying drawings. Although some embodiments of this application are shown in the accompanying drawings, it should be understood that this application may be implemented in various forms, and should not be construed as being limited to embodiments described herein. On the contrary, these embodiments are provided for a more thorough and complete understanding of this application. It should be understood that the accompanying drawings and embodiments of this application are only used as examples, but are not intended to limit the protection scope of this application.

In the descriptions of embodiments of this application, the term "include" and similar terms thereof should be understood as open inclusion, that is, "include but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

For ease of understanding, related terms and concepts that may be used in embodiments are first described in the specification of this application.

Anti-lock braking system (Anti-Lock Braking System, ABS): Usually, a wheel tends to be locked when a vehicle performs emergency braking or brakes on an icy and snowy road. Wheel locking brings about problems such as an increased braking distance and a loss of steering intention. The ABS system determines a wheel locking condition based on a vehicle speed and a wheel speed, and properly reduces braking force at the wheel that tends to be locked, to implement an anti-lock function.

Cooperative regenerative braking system (Cooperative Regenerative Braking System, CRBS): A vehicle dynamically allocates a friction braking torque and a motor energy regeneration braking torque based on a braking requirement of a driver and statuses of systems such as a motor and a battery.

Autonomous emergency braking (Autonomous Emergency Braking, AEB): When a vehicle encounters a sudden dangerous situation or a distance between the vehicle and a front vehicle or a pedestrian is less than a safe distance, the vehicle actively brakes to avoid or reduce collision accidents such as a rear-end collision.

Vehicle control unit (Vehicle Control Unit, VCU): The VCU is a central control unit of a vehicle, and is a core of an entire control system. The VCU collects a motor status and a battery status, an acceleration pedal signal, a brake pedal signal, and actuator and sensor signals, makes comprehensive analysis based on an intention of a driver, and then makes a corresponding decision. The VCU is responsible for vehicle traveling control, accessory management, energy management, troubleshooting, information interaction, and the like.

Drive motor controller (Motor Control Unit, MCU): The drive motor controller controls a rotation status of a motor based on a received instruction, drives a vehicle to travel, performs energy regeneration, or the like.

Intelligent brake unit (Intelligent Brake Unit, IBU): The intelligent brake unit allocates a friction braking torque and an energy regeneration torque on each wheel based on a vehicle status and a braking torque requirement, to ensure vehicle stability and energy regeneration efficiency during braking.

Intelligent pedal unit (Intelligent Pedal Unit, IPU): The intelligent pedal unit identifies a braking intention of a driver based on an action of the driver on a brake pedal, to ensure vehicle stability and energy regeneration efficiency during braking.

Integrated booster (Integrated Booster): The integrated booster is a core of a braking system, and integrates an electronic control unit (Electronic Control Unit, ECU), a pedal travel sensor, a brake master cylinder, a motor, a push rod mechanism, and the like. The intelligent brake unit and the intelligent pedal unit may be integrated in the integrated booster.

Battery management controller (Battery Management System, BMS): The BMS intelligently manages and maintains a battery unit, prevents battery overcharge and overdischarge, extends a battery lifespan, monitors a battery status, and the like. The BMS provides functions such as voltage measurement, energy balancing, SoC calculation, and battery status monitoring.

State of charge (State of Charge, SoC): The state of charge is a ratio of a remaining capacity of a battery to a capacity of the battery at a fully charged state, and is usually expressed in percentage. Usually, a value range is 0 to 1. When the SoC is 0, it indicates that the battery is fully discharged. When the SoC is 1, it indicates that the battery is fully charged.

It should be noted that descriptions of the foregoing terms and concepts are merely intended to aid understanding and use, and should not be understood as a limitation on embodiments of this application.

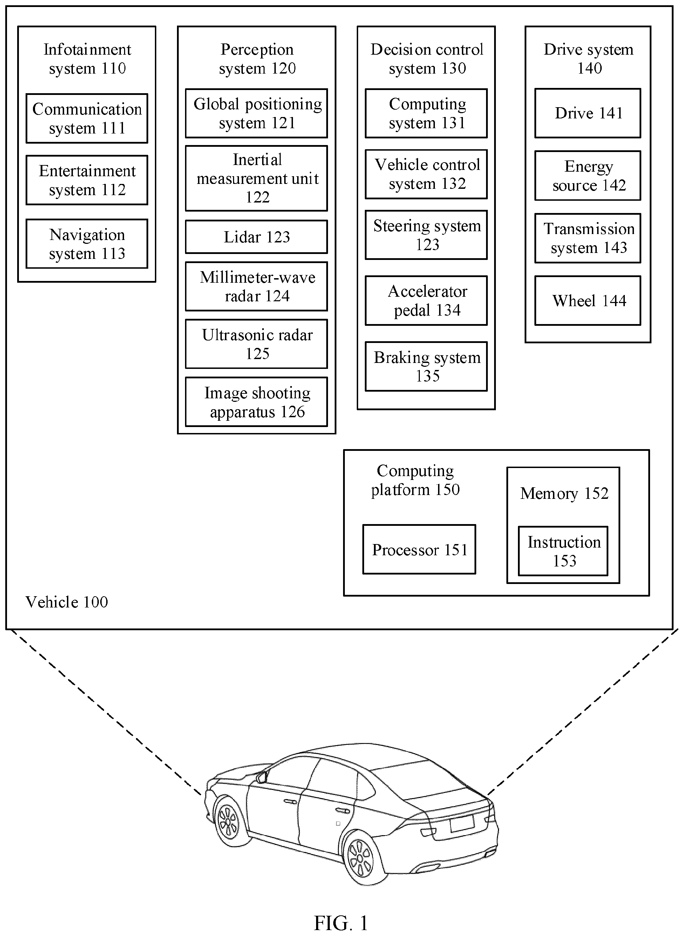

The following describes, with reference to FIG. 1 to FIG. 19, a braking method and a braking system provided in embodiments of this application.

Vehicles are undergoing a transformation of being electric, connected, and intelligent. For the vehicle, various systems, including a braking system, also face changes and upgrades. A structural change and a function upgrade of the braking system are closely related to innovation of a vehicle architecture. Specifically, the following describes the various systems of the vehicle with reference to FIG. 1.

FIG. 1 is a diagram of a vehicle 100 according to an embodiment of this application. The vehicle 100 may include various subsystems, such as an infotainment system 110, a perception system 120, a decision control system 130, a drive system 140, and a computing platform 150. Optionally, the vehicle 100 may include more or fewer subsystems, and each subsystem may include a plurality of components. In addition, all the subsystems and all components of the vehicle 100 may be interconnected in a wired or wireless manner.

For the vehicle, a braking system 135 is one of most critical systems of the vehicle, and directly relates to comprehensive performance of the vehicle and life safety and property security of a passenger. The braking system 135 may be configured to control a speed of the vehicle 100. The braking system 135 may use friction to slow down a rotational speed of a wheel 144. In this specification, friction braking is sometimes referred to as hydraulic braking. In some embodiments, the braking system 135 may further have an energy regeneration braking function.

In addition, the braking system 135 may alternatively control the speed of the vehicle 100 in another manner. For the energy regeneration braking function, when the vehicle decelerates or brakes, some mechanical energy of the vehicle may be converted into electric energy by using a motor, the electric energy is stored in a battery, and some braking force is generated to decelerate or brake the vehicle. When the vehicle accelerates again, the motor reconverts the energy stored in the battery into kinetic energy for traveling of the vehicle. However, because energy regeneration braking faces challenges such as a braking strength limitation, energy regeneration braking cannot meet requirements of all working conditions of braking. Therefore, a hydraulic braking system still has high application value in new energy vehicles.

Development of vehicle intelligence provides more possibilities for development of functions of the braking system. As shown in FIG. 1, the vehicle 100 provided in this embodiment of this application may be configured to be in a fully or partially autonomous driving mode. For example, the vehicle 100 may obtain surrounding environment information of the vehicle 100 by using the perception system 120, and obtain an autonomous driving strategy based on analysis of the surrounding environment information for implementation of fully autonomous driving, or present an analysis result to a user for implementation of partially autonomous driving. In some embodiments, the vehicle 100 may adjust the speed of the vehicle 100 based on perception of a surrounding environment of the vehicle 100. The surrounding environment may include a traffic participant such as another vehicle and/or a pedestrian, or may include a road, infrastructure, or another object. In some examples, the vehicle 100 may autonomously recognize the surrounding environment, and determine the speed of the vehicle 100 based on information (such as a speed, an acceleration, and a distance to the vehicle 100) about an object in the environment.

Improvement of the vehicle in computing and control resources provides more choices for design of a control method of the braking system. As shown in FIG. 1, some or all functions of the vehicle 100 provided in this embodiment of this application are controlled by the computing platform 150. The computing platform 150 may control the functions of the vehicle 100 based on inputs received from the various subsystems (for example, the drive system 140, the perception system 120, and the decision control system 130). Especially for the braking system 135, the computing platform 150 can bring more possibilities for development of the functions of the braking system 135. For example, the computing platform 150 may control the braking system 135 based on an input from the decision control system 130 to avoid collision with an obstacle detected by the perception system 120.

The following describes the computing platform 150 with reference to FIG. 1. The computing platform 150 may include at least one processor 151. The processor 151 may execute an instruction 153 stored in a non-transitory computer-readable medium, for example, a memory 152. In some embodiments, the computing platform 150 may alternatively be a plurality of computing devices that control individual components or the subsystems of the vehicle 100 in a distributed manner.

In the computing platform 150 shown in FIG. 1, the processor 151 may be any conventional processor, such as a central processing unit (Central Process Unit, CPU). Alternatively, the processor 151 may further include, for example, a graphics processing unit (graphics processing unit, GPU), a field programmable gate array (field programmable gate array, FPGA), a system on chip (system on chip, SoC), an application-specific integrated circuit (application-specific integrated circuit, ASIC), or a combination thereof. Although FIG. 1 functionally illustrates the processor, the memory, and another element, a person of ordinary skill in the art should understand that the processor, a computer, or the memory may actually include a plurality of processors, computers, or memories that may or may not be stored in a same physical housing. For example, the memory may be a hard disk drive or another storage medium located in a housing different from that of the computer. Thus, it is understood that a reference to the processor or the computer includes a reference to a set of processors, computers, or memories that may or may not operate in parallel. Different from using a single processor to perform the steps described herein, some components such as a steering component and a brake component may include respective processors. The processor performs only computation related to a component-specific function. In various aspects described herein, the processor may be located far away from the vehicle and wirelessly communicate with the vehicle. In another aspect, some processes described herein are performed on a processor disposed inside the vehicle, while other processes are performed by a remote processor, including performing a step necessary for single manipulation. In some embodiments, the memory 152 may include the instruction 153, for example, program logic. The instruction 153 may be executed by the processor 151 to perform various functions of the vehicle 100. The memory 152 may also include additional instructions, including instructions used to send data to, receive data from, interact with, and/or control one or more of the infotainment system 110, the perception system 120, the decision control system 130, and the drive system 140. In some embodiments, in addition to the instruction 153, the memory 152 may further store data, such as a road map, route information, a location, a direction, and a speed of the vehicle and other such vehicle data, as well as other information. Such information may be used by the vehicle 100 and the computing platform 150 during operation of the vehicle 100 in autonomous, semi-autonomous, and/or manual modes.

It should be noted that FIG. 1 should not be understood as a limitation on embodiments of this application. Optionally, one or more of the foregoing components may be installed separately from or associated with the vehicle 100. For example, the memory 152 may be partially or completely separated from the vehicle 100. The foregoing components may be communicatively coupled together in a wired and/or wireless manner. Optionally, the foregoing components are merely examples. In actual application, components in the foregoing modules may be added, removed, or re-divided according to an actual requirement. In addition, the vehicle 100 may be a passenger vehicle, a commercial vehicle, a motorcycle, a dedicated vehicle (such as a firefighting vehicle, an ambulance, a mining vehicle, or a road construction vehicle), a rail vehicle, a ship, a flight vehicle, or the like. This is not particularly limited in embodiments of this application.

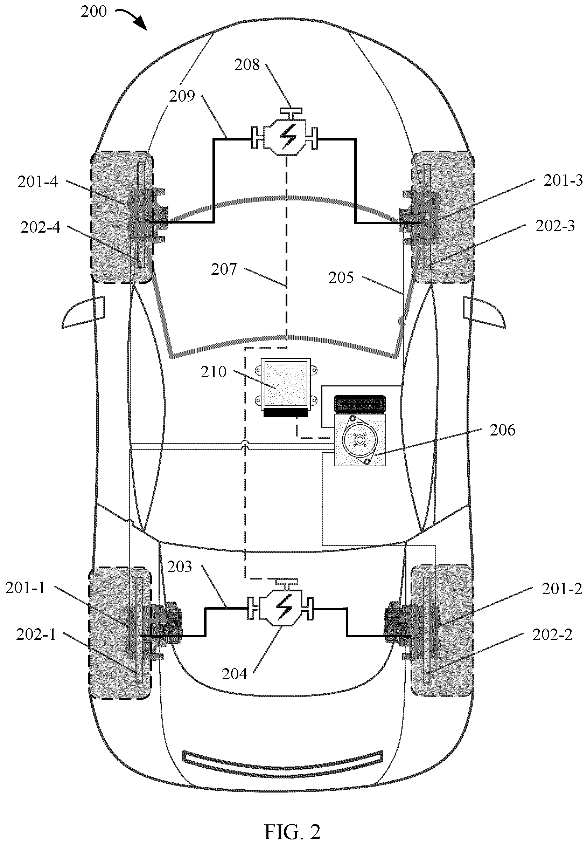

Braking and drive are core control functions of the vehicle, and are used to implement longitudinal control of the vehicle, so that the vehicle accelerates or decelerates, or maintains a specific speed. FIG. 2 provides a diagram of a wire-controlled braking and electric drive system 200.

The braking and electric drive system includes: a brake caliper 201, a friction disc 202, a rear drive shaft 203, a rear drive motor 204, a brake fluid pipe 205, an integrated booster 206, a chassis communication line 207, a front drive motor 208, a front drive shaft 209, and a vehicle control unit 210.

The integrated booster 206 is a core of a braking system, and integrates an electronic control unit (ECU) (for clarity, not shown), a pedal travel sensor, a brake master cylinder, a motor, a push rod mechanism, and the like. In this specification, the electronic control unit in the integrated booster is sometimes referred to as an intelligent brake controller. A brake pedal may be rigidly connected to the integrated booster 206, and the integrated booster 106 is connected to the brake caliper 101 through the brake fluid pipe 105.

The vehicle control unit 210 is a core of a drive system, and is separately connected to the front drive motor 208 and the rear drive motor 204 through controller area network (CAN) communication. The front drive motor 108 is connected to wheels through the front drive shaft 209, and the rear drive motor 204 is connected to wheels through the rear drive shaft 203.

In a drive implementation process, a driver presses an electronic throttle, and the vehicle control unit 210 collects an opening degree of the electronic throttle, calculates torque instructions of the front and rear motors, and sends the torque instructions to drive motor controllers (MCUs) of the front drive motor 208 and the rear drive motor 204 through a CAN (for clarity, not shown). The front drive motor 208 and the rear drive motor 204 send torques, and are connected to the wheels through the front drive shaft 109 and the rear drive shaft 103, to drive the wheels to run forward.

In a braking implementation process, the driver presses the brake pedal, and the push rod mechanism of the integrated booster 106 generates displacement. The pedal travel sensor detects the displacement of the push rod mechanism, and sends a displacement signal to the ECU. The ECU calculates a torque that should be generated by a booster motor, and then a transmission mechanism of the booster motor converts the torque into a braking force. The braking force and a push rod force generated by the brake pedal act by using the push rod mechanism jointly act on the brake master cylinder, and are jointly converted into hydraulic pressure in the brake master cylinder. Brake fluid with the hydraulic pressure acts on the brake caliper 201 through the brake fluid pipe 205. The brake friction disc 202 is clamped, to implement braking.

When braking and drive need to be cooperated, a driving instruction of the integrated booster 206 is received by using the vehicle control unit 210, and after calculation, the driving instruction is separately sent to the front drive motor 108 and the rear drive motor 104 for execution of modified driving torques. Alternatively, cooperation of braking and drive may alternatively be implemented by the drive motor controller and the electronic control unit of the integrated booster 206.

Certainly, in addition to a possible arrangement form provided in FIG. 2, the wire-controlled braking and drive system may be alternatively arranged in another manner in a vehicle. For example, the vehicle may have one drive motor (front drive or rear drive). For another example, the integrated booster 206 and the vehicle control unit 210 may be disposed at another location of the vehicle. For another example, when the vehicle includes more wheels, for example, when the vehicle includes six wheels, the wire-controlled braking and drive system may further include more brake pipelines. Therefore, it should be noted that FIG. 2 is merely used as a possible arrangement manner of the wire-controlled braking and drive system provided in this embodiment of this application, and should not be construed as a limitation on embodiments of this application.

Therefore, it can be understood from the foregoing description that a development trend of being electric, connected, and intelligent imposes a higher requirement on reliability and security of a vehicle braking system. Typically, some electric vehicles use a cooperative regenerative braking function (CRBS) to improve driving experience of a user and increase endurance. When a driver releases a drive pedal or presses a brake pedal, a part of a braking torque generates electricity through a drive motor, so that regenerated energy is stored in a power battery; and another part of the braking torque applies friction on a wheel through a hydraulic braking system, to meet a braking requirement. However, when emergency braking occurs or an ABS is activated on an existing electric vehicle, there is no energy regeneration or a simple energy regeneration strategy is used, which wastes energy and cannot maintain vehicle stability. In addition, due to lack of energy regeneration, a large friction braking torque needs to be output. Consequently, high hydraulic pressure needs to be established inside an integrated booster, which decreases a mechanical life of the integrated booster.

In view of this, this application provides a solution of controlling vehicle braking when emergency braking occurs or the ABS is activated. In this solution, once the vehicle enters emergency braking or enters an ABS state, an energy regeneration braking torque and a friction braking torque are cooperated and adjusted to satisfy a changed braking-required torque, so that effective energy regeneration can be further performed while vehicle stability is ensured.

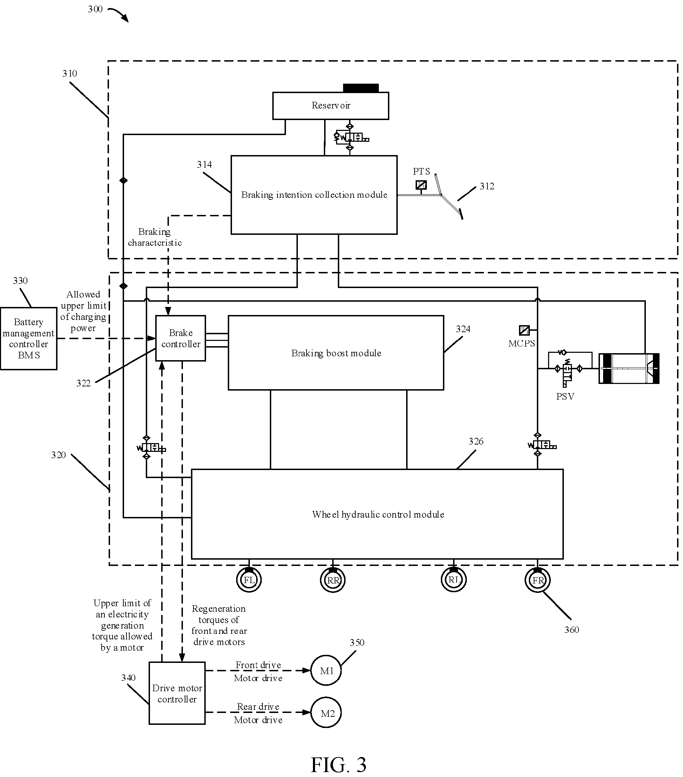

FIG. 3 is a diagram of a braking system according to an embodiment of this application. With reference to FIG. 3, the following describes system composition, a connection relationship, an integration manner, an interface setting, a control relationship, and the like of the braking system 300.

The braking system 300 includes an intelligent pedal unit 310 and an intelligent brake unit 320. In the intelligent pedal unit 310, a brake pedal 312 is coupled to a braking intention collection module 314. Therefore, the braking intention collection module 314 may collect related information about a braking behavior of a driver based on an action of the driver on the brake pedal 312. The braking intention determining module 314 may include various solenoid valve drives, motor drives, and various signal processing and control output interfaces. The braking intention collection module 314 may receive measurement or detection signals of various sensors, such as an environment condition, a driver input, and a braking system status, and control a braking characteristic of the braking system through calculation and determining. In some embodiments, the braking intention collection module 314 may be configured to collect a speed, travel, pressure information established therefrom, and the like that are of pressing the brake pedal 312 by the driver and that are collected in a current periodicity and several previous periodicities.

The intelligent brake unit 320 includes an electronic control unit 322, a braking boost module 324, and a wheel hydraulic control module 326. The electronic control unit 322 determines, based on vehicle status information or control information from the braking intention collection module 314, a battery management control module 330, and a drive motor controller (MCU) 340, an energy regeneration braking torque and a friction braking torque used for braking. As shown in the figure, the brake controller 322 may receive an allowed upper limit value of charging power from the BMS 330, and the allowed upper limit value of the charging power may be determined based on a SoC state. The brake controller 322 may further receive, from the MCU 340, an upper limit value of an electricity generation torque allowed by a motor. The brake controller 322 determines a maximum energy regeneration braking torque based on the upper limit value of the charging power and the upper limit value of the electricity generation torque. For example, a smaller one of the upper limit value of the electricity generation torque and a torque corresponding to the upper limit value of the charging power is determined as the maximum energy regeneration braking torque. The brake controller 322 may receive the braking characteristic from the braking intention collection module 314. The braking characteristic may include, for example, the speed, the travel, the pressure information established therefrom. Based on this, the brake controller 322 may determine a braking-required torque of a wheel. On one hand, if an ABS is not started, the brake controller 322 may directly generate the braking-required torque of the wheel based on the braking characteristic. On the other hand, if the ABS is started due to vehicle slipping (determined based on a vehicle speed and a wheel speed), the brake controller 322 does not use the braking-required torque determined based on the braking characteristic of the pedal 312, but uses a braking-required torque provided by the ABS for each wheel, to maintain vehicle body stability through "snub braking". In some embodiments, the ABS may be integrated into the brake controller 322, or may be disposed separately.

According to this embodiment of this application, the brake controller 322 may further divide the braking-required torque into the energy regeneration braking torque and the friction braking torque. In other words, the braking-required torque is equal to a sum of the energy regeneration braking torque and the friction braking torque. The energy regeneration braking torque may be sent by the brake controller 322 to the MCU 340, and the MCU 340 transmits torque information to the corresponding drive motor 350, to implement energy regeneration braking. Usually, response time of the energy regeneration braking torque of the drive motor is approximately 10 ms.

In addition, the brake controller 322 controls the braking boost module 324 and the wheel hydraulic control module 326 based on the friction braking torque, and applies hydraulic pressure corresponding to the friction braking torque, to perform friction braking for each wheel 360. Specifically, the braking boost module 324 may include components such as a booster motor, a bidirectional booster cylinder, and a booster control valve, and is coupled to the wheel hydraulic control module 326 to provide a friction braking capability for each wheel. The wheel hydraulic control module 326 may include a wheel-cylinder booster valve and a wheel-cylinder relief valve for each wheel 360. Usually, a speed at which the integrated booster 320 increases the friction braking torque by establishing hydraulic pressure is slow (for example, 100 Bar is increased in 150 ms), while a speed at which the integrated booster decreases the friction braking torque through pressure relief is slightly faster (for example, 50 Bar is decreased in 10 ms). As mentioned above, the response time of the energy regeneration braking torque is approximately 10 ms. Therefore, a response speed of energy regeneration braking is clearly faster than that of friction braking. When emergency braking occurs or the ABS is started, the braking-required torque of a vehicle fluctuates rapidly. In this case, a conventional solution cannot cooperate a CRBS and the ABS well, which may cause vehicle instability, an unexpected longitudinal acceleration, and decreased energy regeneration, and establishing high hydraulic pressure in short time may also reduce a mechanical life of the booster.

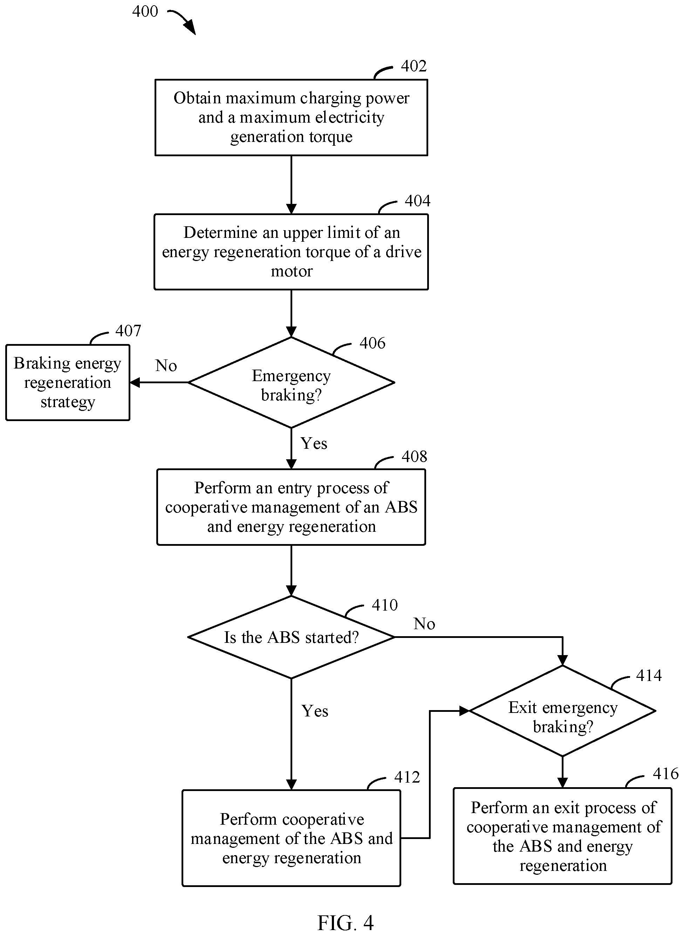

FIG. 4 is a schematic flowchart of a process 400 for braking a vehicle according to an embodiment of this application. The process 400 may be implemented by any one of the integrated booster 206 and the vehicle control unit 210 shown in FIG. 2 and the brake controller 322 and the MCU 340 shown in FIG. 3. For ease of understanding, the process 400 is described with reference to FIG. 3.

In a block 402, the brake controller 322 obtains, from the BMS 330, current maximum charging power allowed by a battery, and obtains, from the drive motor controller 340, a current maximum electricity generation torque of a motor.

In a block 404, the brake controller 322 separately calculates a current upper limit of an energy regeneration torque of the drive motor based on the maximum charging power and the maximum electricity generation torque obtained from the BMS 330 and the MCU 340.

In a block 406, the brake control 322 determines whether there is an intention of emergency braking. The brake controller 322 comprehensively calculates a braking intention of a driver based on information that is about pressing a brake pedal by the driver, pressure established in the integrated booster, and the like and that is collected in a current periodicity and several previous periodicities.

In some embodiments, the brake controller 322 may obtain, from the braking intention collection module 314, a speed, travel, and pressure information about pressing the brake pedal 312 by the driver, to determine whether there is the intention of emergency braking. For example, the brake controller 322 may determine, based on that pressing pressure is sufficiently large, that the brake pedal 312 is quickly pressed, or determine, based on that an increment of the travel of the pedal within preset time is greater than a preset value, or that the travel of the pedal is greater than or equal to a preset threshold, that the driver is performing emergency braking on the vehicle. When the vehicle is configured with an autonomous emergency braking (AEB) function, in response to an indication, received by the electronic control unit 322, that the AEB function is triggered, the electronic control unit 322 may alternatively determine that there is the intention of emergency braking. In addition, if an ABS of the vehicle is started, the electronic control unit 322 may also determine that there is the intention of emergency braking. It should be understood that whether there is the intention of emergency braking may be alternatively determined based on other information. This is not limited in this application.

If there is no intention of emergency braking, the process 400 proceeds to a block 407, and the brake controller 322 executes a braking energy regeneration strategy. The braking energy regeneration strategy may be a CRBS regeneration strategy, for example, a filtering-based method, where a braking-required torque is filtered, and is divided into a high-frequency component and a low-frequency component that are respectively used as the energy regeneration braking torque and a friction braking torque. The braking energy regeneration strategy is not limited in this application.

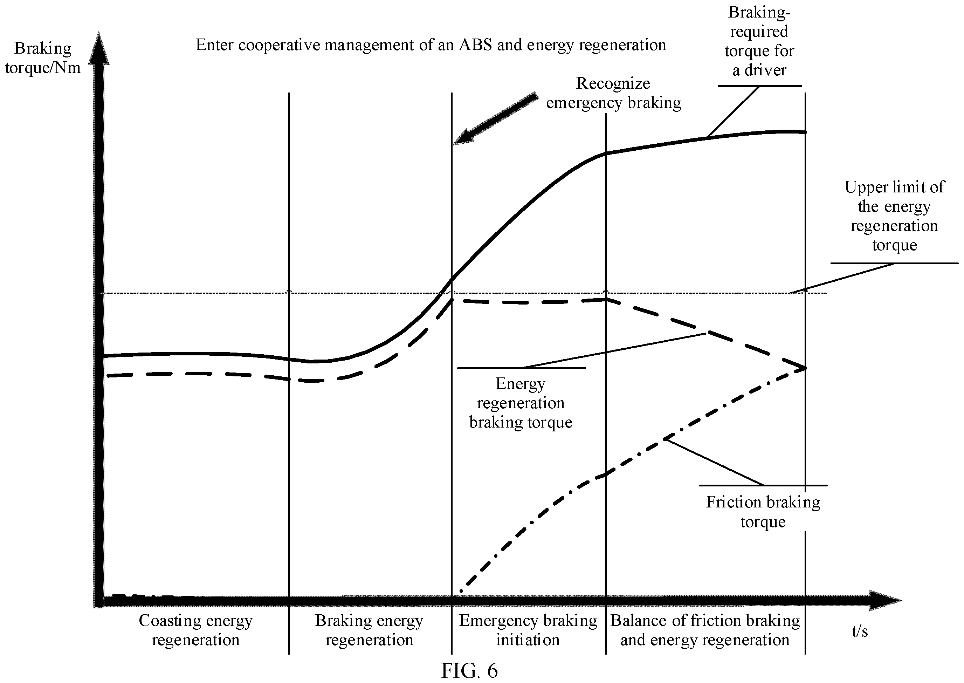

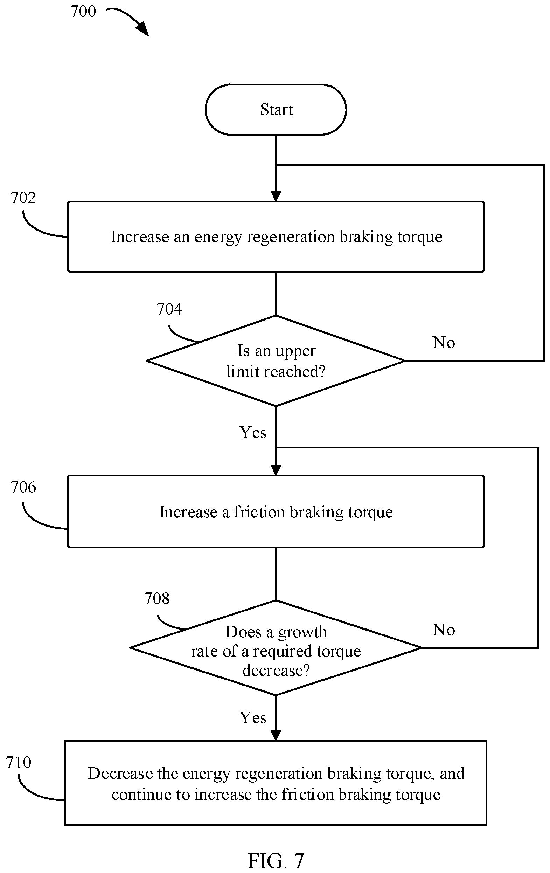

If there is the intention of emergency braking, the process 400 proceeds to a block 408, and the brake controller 322 performs an entry process of cooperative management of the ABS and energy regeneration. The entry process is performed, so that a braking-required torque of each wheel can be preferentially allocated between energy regeneration braking and friction braking in advance, to prepare for a possible ABS braking requirement. Once the ABS is started, an energy regeneration braking torque and a friction braking torque can be flexibly adjusted, to quickly respond to and meet the ABS braking requirement that fluctuates significantly. The following describes the entry process 408 with reference to FIG. 6 and FIG. 7, and details are not described herein.

When or after the entry process of the block 408 is performed, in a block 410, the brake controller 322 determines whether the ABS is started. If the ABS is not started, the process 400 proceeds to a block 414, and the brake controller 322 determines whether there is an intention to exit emergency braking.

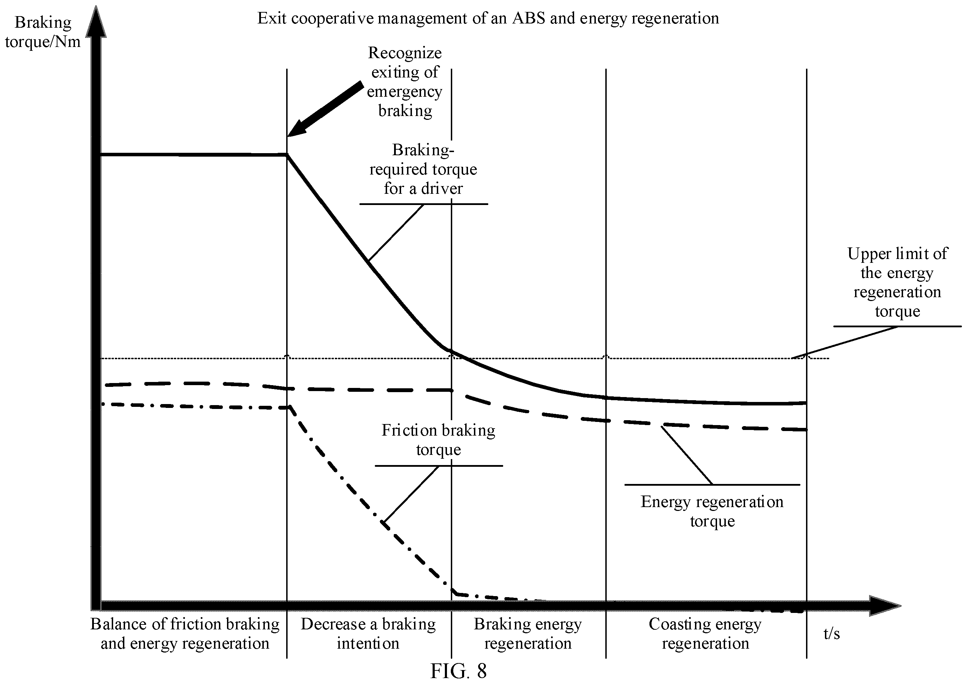

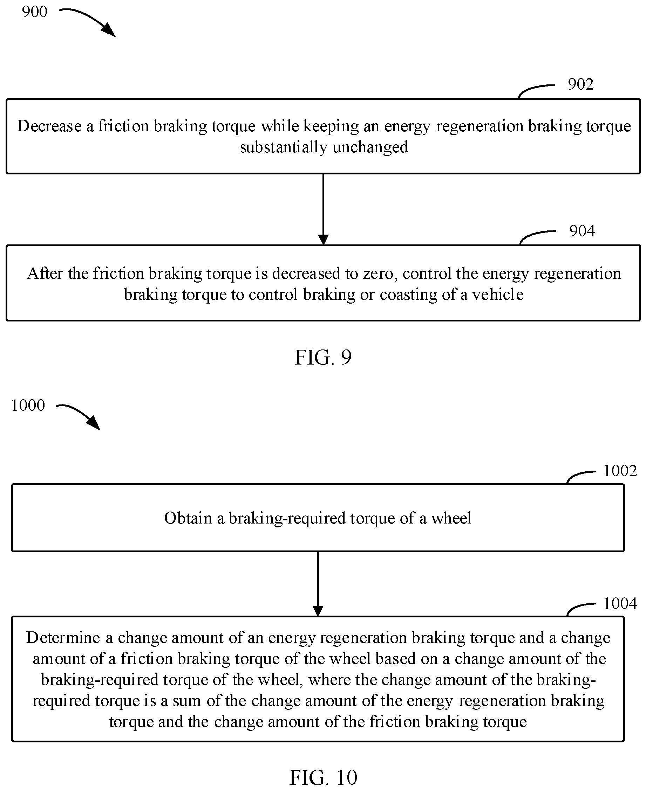

The intention to exit emergency braking means that the brake controller 322 recognizes that the braking intention of the driver is decreasing, and the driver is about to exit the ABS or even exit braking. A determining basis includes determining that the driver quickly releases the pedal or determining that the driver releases the pedal. For example, a decrement of the travel of the pedal within the preset time is greater than the preset value, or the travel of the pedal is less than preset travel. In some embodiments, the brake controller 322 may alternatively determine, based on a received indication of ending of autonomous emergency braking, that the vehicle exits an emergency braking state. In response to determining that there is the intention to exit emergency braking, in a block 416, the brake controller 322 performs an exit process 416 of cooperative management of the ABS and energy regeneration. The following describes the entry process with reference to FIG. 8 and FIG. 9, and details are not described herein.

If the ABS is started, the process 400 proceeds to a block 412, and the brake controller 322 performs cooperative management of the ABS and energy regeneration. In the cooperative management 412 of the ABS and energy regeneration, the brake controller 322 flexibly allocates the braking-required torque to the drive motor and a friction brake based on a vehicle status and a traffic environment, to implement cooperative braking. The following describes the cooperative management 412 of the ABS and energy regeneration with reference to FIG. 10 to FIG. 15, and details are not described herein.

In addition, in a process of performing cooperative management of the ABS and energy regeneration, if the brake controller 322 determines that there is the intention to exit emergency braking, the process 400 may proceed to the block 416 to perform the exit process.

In the process 400 shown in FIG. 4, results of performing the entry process 408, the cooperative management 412 of the ABS and energy regeneration, and the exit process 416 by the brake controller 322 may include an energy regeneration braking torque and a friction braking torque for each wheel. The brake controller 322 may further process the energy regeneration braking torque and the friction braking torque obtained from these processes to determine torques actually executed by the drive motor and a friction disc.

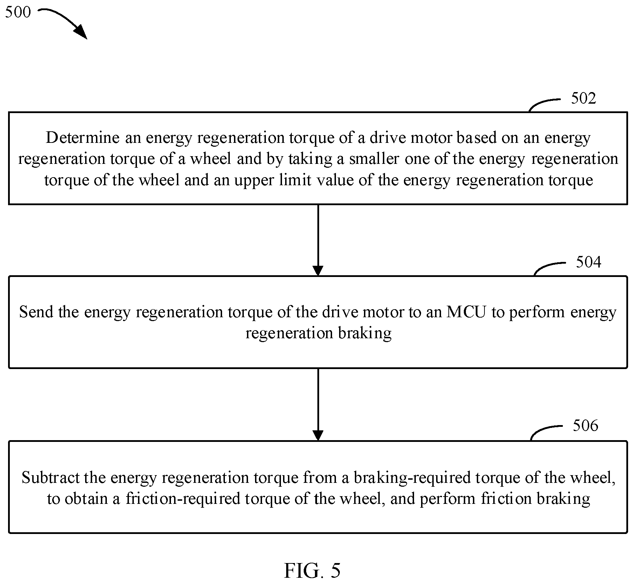

FIG. 5 is a schematic flowchart of another process 500 for braking a vehicle according to an embodiment of this application In a block 502, the brake controller 322 determines an energy regeneration torque of a drive motor based on an energy regeneration braking torque of a wheel and by taking a smaller one of the energy regeneration braking torque of the wheel and an upper limit value of the energy regeneration torque. Specifically, for two wheels driven by a same drive motor, the brake controller 322 may synthesize an energy regeneration torque by taking a minimum, average, or maximum value, and then compare a synthesized value with the upper limit of the energy regeneration torque obtained in the block 404, to take a smaller value as the energy regeneration torque of the drive motor. Optionally, the energy regeneration torque may alternatively be synthesized based on energy regeneration braking torques of all wheels.

In a block 504, the brake controller 322 sends the determined energy regeneration torque of the drive motor to the MCU 340, for example, through a dedicated high-speed communication line. In this way, the drive motor 350 may implement braking based on the received energy regeneration torque.

In a block 506, the brake controller 322 subtracts the energy regeneration torque of the drive motor from a braking-required torque of each wheel, to obtain a friction-required torque of each wheel, and sends the friction-required torque of each wheel to a friction execution unit (for example, the braking boost module 324 and the wheel hydraulic control module 326) to implement friction braking. In other words, a friction braking torque may be used to compensate for an energy regeneration torque that may be unexecuted because the energy regeneration torque exceeds the upper limit of the energy regeneration torque, to ensure that a sum of braking torques of the wheel is equal to the braking-required torque.

Refer to FIG. 6 and FIG. 7. The following describes an entry process of cooperative management and control of an ABS and energy regeneration according to an embodiment of this application. FIG. 6 is a curve diagram in which a braking torque varies with time in the entry process. FIG. 7 is a schematic flowchart of the entry process of cooperative control of the ABS and energy regeneration according to this embodiment of this application.

Refer to FIG. 6. First, in a coasting energy regeneration phase, a driver releases a throttle and has not pressed a brake pedal. A vehicle is in the middle of a coasting process, and executes a coasting energy regeneration strategy. In this case, a braking-required torque for the driver is substantially consistent with an energy regeneration-required torque. That is, braking is substantially implemented in an energy regeneration manner, and a braking torque does not fluctuate significantly.

In a braking energy regeneration phase, the driver presses the brake pedal. The vehicle is in a braking energy regeneration process, and correspondingly executes a braking energy regeneration strategy. In this case, the braking-required torque for the driver is substantially consistent with the energy regeneration-required torque, and an energy regeneration braking torque is increased to match the braking-required torque for the driver.

In an emergency braking initiation phase, an entry sign of this phase is that the driver is detected to have an intention of emergency braking. As described above, the determining basis includes: The driver quickly presses the pedal, the driver deeply presses the pedal, or an AEB braking indication is received. In this case, before the braking-required torque for the driver reaches an upper limit of the energy regeneration torque, the energy regeneration braking torque is increased to match the braking-required torque.

Then, after the upper limit is reached, the energy regeneration torque remains unchanged, and an increased total braking-required torque is all implemented by using a friction braking torque. Therefore, a change of a deceleration of the vehicle conforms to a deceleration feeling of a conventional vehicle without energy regeneration, and a problem of deceleration fluctuation occurring in the entry phase is avoided.

Then, enter a balance phase of the friction braking torque and the energy regeneration torque. As a gradient of the braking-required torque for the driver gradually decreases, the energy regeneration torque may be decreased to a preset value, and the friction braking torque continues to be increased for compensation. In other words, the braking-required torque for the driver is equal to a sum of the friction braking torque and the energy regeneration braking torque. In some embodiments, the preset value, of the energy regeneration torque, existing when this phase ends is determined in the following manner: The preset value of the energy regeneration torque is within an interval of the upper limit value of the energy regeneration torque, for example, the upper limit of the energy regeneration torque*50% (which can be calibrated)<the energy regeneration torque<the upper limit of the energy regeneration torque*70% (which can be calibrated); and the preset value is within an interval of the braking-required torque for the driver, for example, the braking-required torque for the driver*40% (which can be calibrated)<the energy regeneration torque<the braking-required torque for the driver*60% (which can be calibrated). In addition, in an interval that meets the foregoing two conditions, the energy regeneration torque may be a maximum value or any other value (which can be calibrated) in the common interval.

FIG. 7 shows actions implemented in the phases of FIG. 6. In a block 702, in correspondence to the braking energy regeneration phase in FIG. 6, the brake controller 322 increases the energy regeneration braking torque.

In a block 703, in correspondence to the emergency braking phase in FIG. 6, the brake controller 322 determines whether the energy regeneration braking torque reaches the energy regeneration upper limit. If the energy regeneration braking torque does not reach the energy regeneration upper limit, return to the block 702 and continue to increase the energy regeneration braking torque. If the energy regeneration braking torque reaches the energy regeneration upper limit, in a block 706, the friction braking torque is increased.

Then, in a block 708, it is determined whether a growth rate of the required torque decreases. If the growth rate of the required torque decreases, in correspondence to the balance phase of friction braking and energy regeneration shown in FIG. 6, in a block 710, the energy regeneration braking torque is decreased and the friction braking torque continues to be increased until the energy regeneration braking torque is decreased to the preset value and remains.

Refer to the process 400 shown in FIG. 4. An ending condition of the entry process 408 includes that the ABS is started in 410 or that exiting of emergency braking is determined. If the ABS is started, the brake controller 322 performs the cooperative management process 412 of the ABS and energy regeneration. If the driver exits emergency braking, the brake controller 322 performs the exit process 416 of cooperative management of the ABS and energy regeneration. The following first describes the exit process 416 with reference to FIG. 8 and FIG. 9.

As shown in FIG. 8, in response to recognition of exiting emergency braking, in a phase of decreasing a braking intention, the driver decreases the braking-required torque at a large rate. For example, when the pedal is quickly released, or the braking intention is continuously decreased for long time, or the AEB has stopped, the energy regeneration torque remains unchanged, and the friction braking torque is gradually decreased based on a change of the braking-required torque. This process continues until the friction braking torque is decreased to around 0.

In a braking energy regeneration phase, the driver still presses the brake pedal. The vehicle is in a braking energy regeneration process, and executes a braking energy regeneration strategy.

In a coasting energy regeneration phase, the driver releases the brake pedal and has not pressed a throttle pedal. The vehicle is in a coasting process and executes a coasting energy regeneration strategy.

FIG. 9 shows actions implemented in the phases of FIG. 8. In the block 702, in correspondence to the braking energy regeneration phase in FIG. 6, the brake controller 322 increases the energy regeneration braking torque. In a block 902, in correspondence to the phase of decreasing the braking intention in FIG. 8, the brake controller 322 decreases the friction braking torque while keeping the energy regeneration braking torque substantially unchanged.

In a block 904, in correspondence to the braking energy regeneration phase and the coasting energy regeneration phase in FIG. 8, after the friction braking torque is decreased to zero, the energy regeneration braking torque is controlled to control braking or coasting of the vehicle. At this time, the energy regeneration torque is substantially consistent with the braking-required torque.

With reference to FIG. 10 to FIG. 15, the following describes a process 1000 of cooperative management of an ABS and energy regeneration according to an embodiment of this application. The process 1000 may be implemented by any one of the integrated booster 206 and the vehicle control unit 210 shown in FIG. 2 and the brake controller 322 and the MCU 340 shown in FIG. 3. For ease of understanding, the process 1000 is described with reference to FIG. 3.

In a block 1002, the brake controller 322 obtains a braking-required torque of a wheel.

When an ABS of a vehicle is started, the ABS may generate a braking-required torque for each wheel of the vehicle, and does not use a braking torque generated by brake pedal pressure. For example, it may be determined whether the wheel is locked based on a vehicle speed and a wheel speed. If the wheel is locked and it is determined that a side slip has occurred or is about to occur, the ABS is started. In this case, the brake controller 322 obtains the braking-required torque from the ABS.

In some embodiments, the brake controller 322 may alternatively obtain the braking-required torque from another source, for example, an automatic assisted driving system or a remote control command received through a network. This is not limited in this application.

In a block 1004, the brake controller 322 determines a change amount of an energy regeneration braking torque and a change amount of a friction braking torque of the wheel based on a change amount of the braking-required torque of the wheel, where the change amount of the braking-required torque is a sum of the change amount of the energy regeneration braking torque and the change amount of the friction braking torque. With a change of the braking-required torque, the brake controller allocates the change amount of the braking-required torque to the energy regeneration braking torque and a friction braking regeneration torque. In some embodiments, a cooperative control strategy type of each single wheel may be determined, and the change amount of the braking-required torque is allocated based on this strategy. A cooperative control strategy type of the ABS and energy regeneration of the single wheel may include three modes: energy regeneration priority, friction braking priority and cooperative adjustment. A cooperative control type of the single wheel may be determined based on the vehicle speed, a wheel speed, and a road adhesion coefficient. It should be understood that these modes are merely examples, and another strategy may alternatively be used.

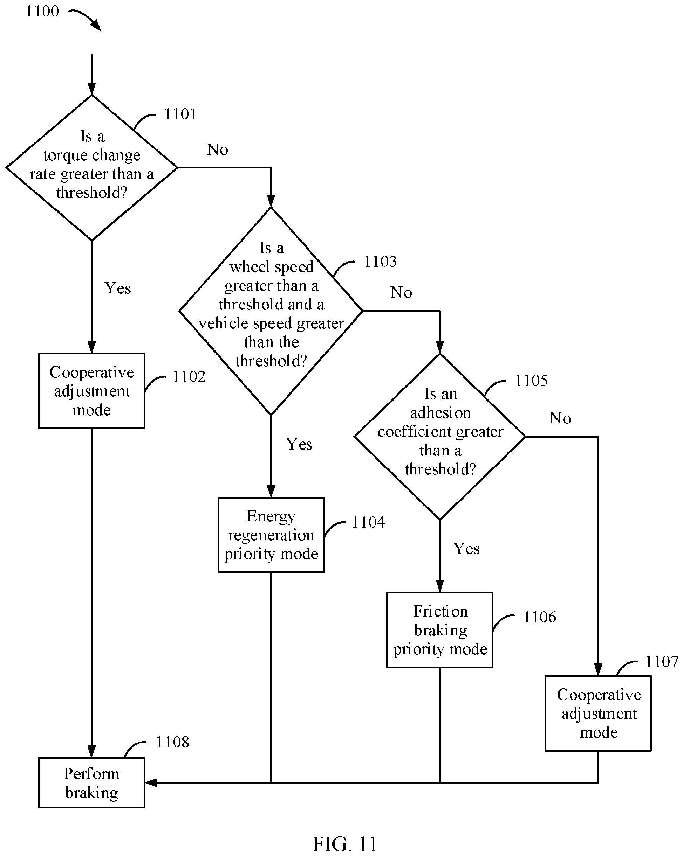

FIG. 11 is a schematic flowchart of a process 1100 of cooperative control of an ABS and energy regeneration according to an embodiment of this application.

In a block 1101, the brake controller 322 determines whether a change rate of a braking-required torque is greater than or equal to a threshold change rate. If the change rate of the braking-required torque is greater than or equal to the threshold change rate, in a block 1102, it is determined that a cooperative adjustment mode is used. Here, the change rate may be an absolute value of a change amount (increment or decrement), of the braking-required torque, generated over two or more control periodicities.

To prevent a wheel from being locked and causing vehicle body instability, the braking-required torque of the ABS is represented as "snub braking". That is, a large braking torque is not constantly required, and a braking torque is applied intermittently. As described above, when the braking-required torque decreases significantly, a response of a drive motor torque is approximately 10 ms. An integrated booster may release 50 Bar pressure by using a discharge valve to release pressure for 10 ms. An energy regeneration actuator and a friction braking actuator have balanced capabilities in decreasing the braking torque, and can therefore be well cooperated. When the braking-required torque increases rapidly, the energy regeneration actuator and the friction braking actuator are fully operated, to cooperate to rapidly increase the braking torque.

In a cooperative adjustment mode, a ratio between a change amount of an energy regeneration braking torque and a change amount of a friction braking torque may be a first preset ratio, and the braking actuator 322 may determine the change amount of an energy regeneration specified torque and the change amount of the friction braking torque based on the first preset ratio. In some embodiments, a weight of the change amount of the energy regeneration braking torque is approximately equivalent to a weight of the change amount of the friction braking torque. For example, the weight of the change amount of the energy regeneration torque is 55% (which can be calibrated), and the weight of the change amount of the friction braking torque is 45% (which can be calibrated).

If the change rate of the braking-required torque is less than the threshold change rate, in a block 1103, it is determined whether a vehicle speed and a wheel speed are greater than or equal to a corresponding threshold. If the vehicle speed and the wheel speed are greater than or equal to the corresponding threshold, in a block 1104, it is determined that an energy regeneration priority mode is used. For example, if both the vehicle speed and the wheel speed are greater than 70 km/h (which can be calibrated), a rotational speed of the corresponding drive motor is high and counter electromotive force is large. In this case, a voltage control value output by a control inverter of the drive motor is adjusted in a large range, and the energy regeneration torque can be increased and decreased quickly. Therefore, the energy regeneration priority mode is used.

More braking-required torques are allocated to the energy regeneration torque in the energy regeneration priority mode than in the cooperative adjustment mode. In the energy regeneration priority mode, the ratio between the change amount of the energy regeneration braking torque and the change amount of the friction braking torque may be a second preset ratio. The second preset ratio is greater than the first preset ratio of the cooperative adjustment mode. For example, a weight of the change amount of the energy regeneration braking torque is 80% (which can be calibrated), and a weight of the change amount of the friction braking torque is 20% (which can be calibrated).

Next, if it is determined that the vehicle speed and the wheel speed do not meet a condition in the block 1103, in a block 1105, it is determined whether a road adhesion coefficient is greater than or equal to a corresponding threshold. If the road adhesion coefficient is greater than or equal to the corresponding threshold, in a 1106, it is determined that a friction braking priority mode is used. For example, if the road adhesion coefficient is greater than 0.7 (which can be calibrated), high pressure is established inside the corresponding integrated booster. In this case, the vehicle speed and the wheel speed are not large, the rotational speed of the drive motor is not high, and adjustment of the energy regeneration torque is not easy. Therefore, the friction braking priority mode is used.

More braking-required torques are allocated to the friction braking torque in the friction priority mode than in the cooperative adjustment mode. In the friction priority mode, the ratio between the change amount of the energy regeneration braking torque and the change amount of the friction braking torque may be a third preset ratio. The third preset ratio is less than the first preset ratio of the cooperative adjustment mode. For example, a weight of the change amount of the energy regeneration braking torque is 20% (which can be calibrated), and a weight of the change amount of the friction braking torque is 80% (which can be calibrated).

In addition, if all conditions in the blocks 1101, 1103, and 115 are not met, in a block 1107, it is determined that the cooperative adjustment mode is used. In this case, both the friction priority mode and the energy regeneration priority mode have no clear advantage.

Then, after it is determined that a regeneration strategy is the cooperative adjustment mode 1102, the energy regeneration priority mode, or the friction priority mode, in a block 1108, braking is performed. For example, energy regeneration braking and friction braking may be executed based on the process 500 described with reference to FIG. 5.

In some embodiments, cooperative control in a low vehicle speed is further provided. Cooperative control in the low vehicle speed is used, so that the energy regeneration torque can still be maintained when a vehicle is about to stop, for example, when the vehicle speed and the wheel speed are lower than 5 km/h (which can be calibrated). In this case, although energy regeneration efficiency is low, a power battery is still charged by using a bidirectional direct current converter of the drive motor when the counter electromotive force of the motor is excessively low, and even the power battery is allowed to discharge, to maintain the energy regeneration torque.

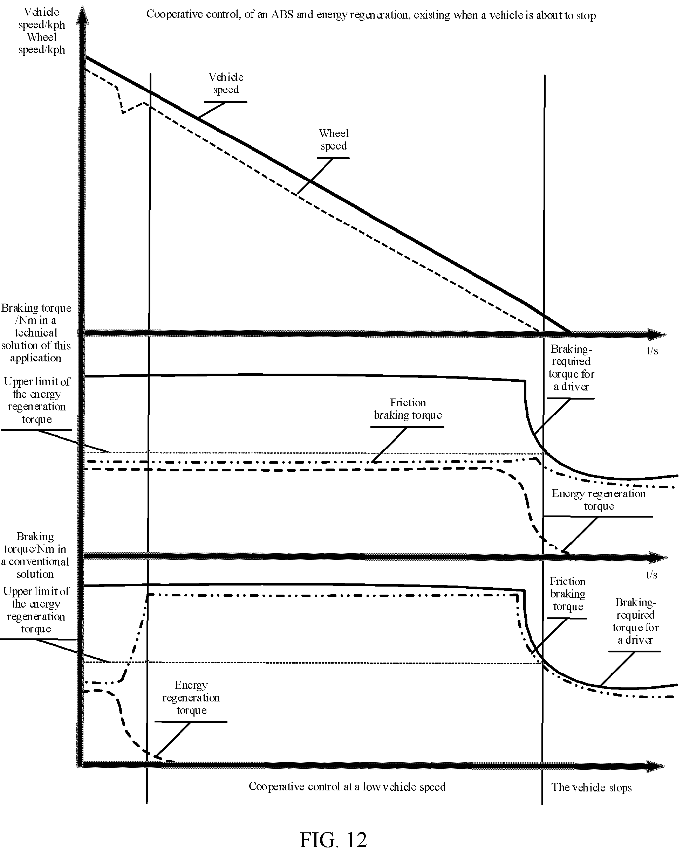

FIG. 12 is a curve diagram of a process of cooperative control, of an ABS and energy regeneration, existing when a vehicle is about to stop according to an embodiment of this application. As shown in the figure, as a vehicle speed decreases until the vehicle stops, a braking-required torque for a driver remains substantially unchanged. According to this embodiment of this application, the braking-required torque for the driver is evenly allocated to an energy regeneration braking torque and a friction braking torque for execution. However, in a conventional solution, when the vehicle is about to stop, the braking-required torque for the driver is substantially executed by the friction braking torque. This embodiment of this application is different from the conventional solution in that good vehicle body stability can be maintained when the vehicle is about to stop.

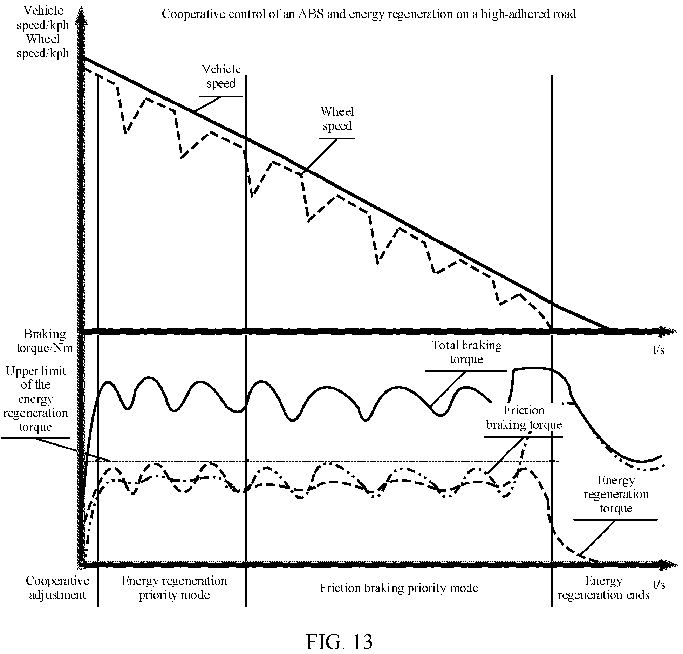

FIG. 13 is a curve diagram of a process of cooperative control of an ABS and energy regeneration on a high-adhered road according to an embodiment of this application. As shown, due to a difference between a vehicle speed and a wheel speed, the ABS is started and provides a total braking torque, that is, a braking-required torque for single wheels. At first, when a change rate (slope) of the total braking torque is large (meeting the condition in the block 1101), a cooperative adjustment mode is used. When the change rate of the total braking torque is lower than a threshold, and the vehicle speed and the wheel speed meet a corresponding threshold (meeting the condition in the block 1103), an energy regeneration priority mode is used. Then, when the vehicle speed becomes lower and it is determined that a current road adhesion coefficient is high (meeting the condition in the block 1105), a friction braking priority mode is used. When the vehicle speed is low and the vehicle is about to stop, the vehicle enters an energy regeneration ending phase until the vehicle stops.

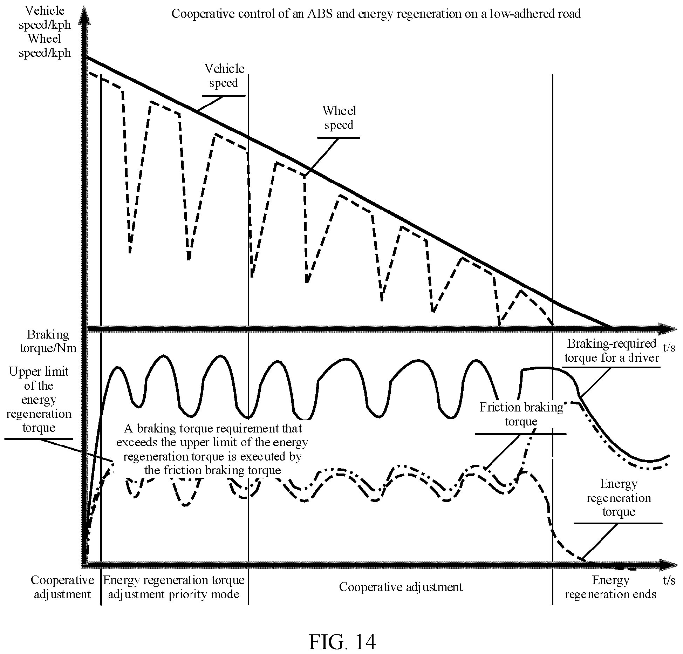

FIG. 14 is a curve diagram of a process of cooperative control of an ABS and energy regeneration on a low-adhered road according to an embodiment of this application. As shown in the figure, there is a clearer difference between a vehicle speed and a wheel speed on the low-adhered road, and the ABS S is started and provides a total braking torque, that is, a braking-required torque for single wheels. After the vehicle speed and the wheel speed decrease, because a vehicle travels on the low-adhered road, a friction braking priority mode is not used, but a cooperative adjustment mode is used. This is different from the example in FIG. 13.

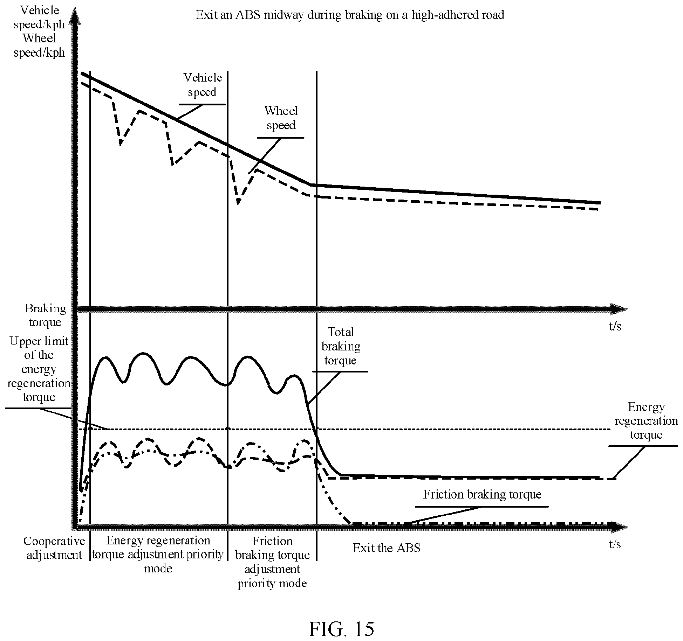

FIG. 15 is a curve diagram of a process of exiting an ABS midway during braking on a high-adhered road according to an embodiment of this application. Once a vehicle exits the ABS or exiting of emergency braking is determined, energy regeneration may be preferred to match a total braking torque. As shown in the figure, in response to detecting that the vehicle exits the ABS or exiting of emergency braking is determined, a friction braking torque is decreased to zero. After that, an energy regeneration torque is substantially consistent with the total braking torque.

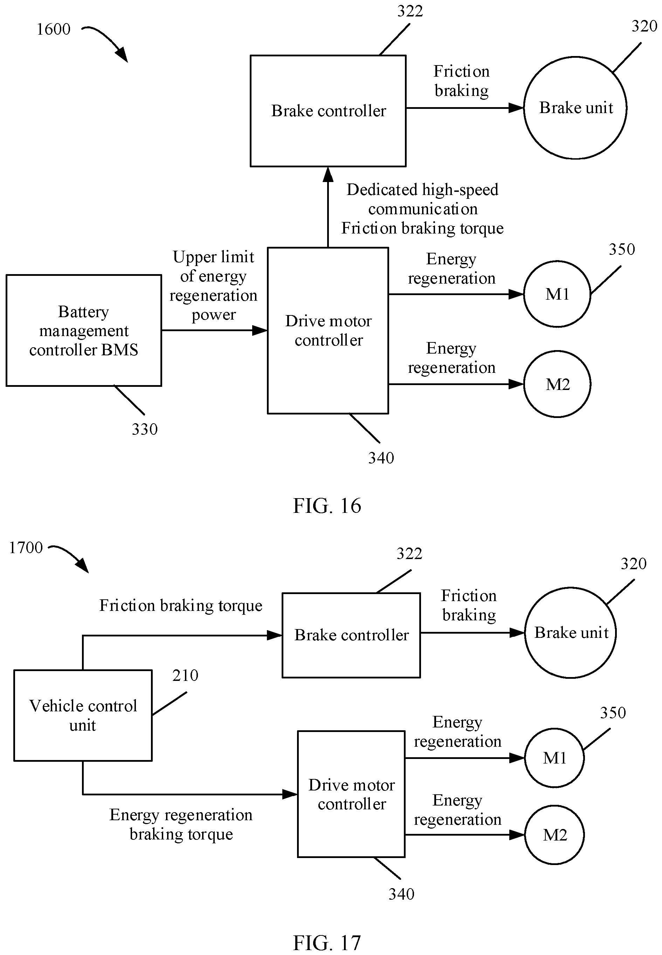

FIG. 16 is a diagram of another braking system 1600 according to an embodiment of this application. In this embodiment, with reference to the systems shown in FIG. 2 and FIG. 3, the drive motor controller 340 implements a process of cooperative control of an ABS and energy regeneration according to this embodiment of this application.

As shown in the figure, the battery management controller BMS 330 may provide an upper limit of energy regeneration power to the drive motor controller. The drive motor controller 340 performs the processes described with reference to FIG. 4 to FIG. 15, to determine an energy regeneration braking torque and a friction braking torque. The drive motor controller 340 controls the motor 350 to execute the determined energy regeneration braking torque. Through dedicated high-speed communication, the drive motor controller sends the friction braking torque to the brake controller 322. The brake controller 322 controls the brake unit 320 to execute the determined friction braking torque, for example, uses the braking boost module 324 and the wheel hydraulic control module 326 to apply braking hydraulic pressure, to generate the friction braking torque.

FIG. 17 is a diagram of still another braking system 1700 according to an embodiment of this application. In this embodiment, with reference to the systems shown in FIG. 2 and FIG. 3, the vehicle control unit 210 implements a process of cooperative control of an ABS and energy regeneration according to this embodiment of this application

The vehicle control unit 210 may be a VCU with high computing power. The VCU with high computing power is used as a core, and a high-speed communication line is used to connect actuators, including a braking actuator 322 and the drive motor controller 340. The vehicle control unit 210 may receive an upper limit of energy regeneration power from the battery management controller BMS 330, and determine an energy regeneration braking torque and a friction braking torque. The vehicle control unit 330 may send a corresponding execution instruction to a corresponding actuator through dedicated high-speed communication, including sending the friction braking torque to the brake controller 322, so that the brake controller 322 controls the brake unit 320 to execute the determined friction braking torque. The vehicle control unit 210 further sends the energy regeneration braking torque to the drive motor controller 340, so that the motor 350 executes the energy regeneration braking torque.

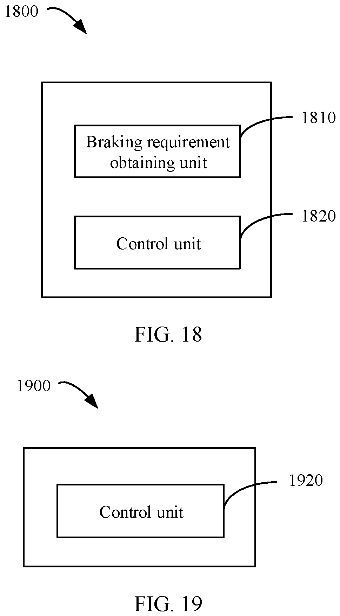

FIG. 18 is a block diagram of a braking apparatus 1800 according to an embodiment of this application. The braking apparatus 1800 may be implemented in an intelligent brake controller 322 of a vehicle, a drive motor controller 340 of the vehicle, or a vehicle control unit 210 of the vehicle.

The braking apparatus 1800 includes a braking requirement obtaining unit 1810. The braking requirement obtaining unit 1810 is configured to obtain a braking-required torque of a wheel. The braking apparatus further includes a control unit 1820. The control unit 1820 is configured to determine a change amount of an energy regeneration braking torque and a change amount of a friction braking torque of the wheel based on a change amount of the braking-required torque of the wheel. The change amount of the braking-required torque is a sum of the change amount of the energy regeneration braking torque and the change amount of the friction braking torque.

In some embodiments, the control unit 1820 may be further configured to: if a change rate of the braking-required torque is greater than or equal to a threshold change rate, determine the change amount of the energy regeneration braking torque and the change amount of the friction braking torque based on a first preset ratio between the change amount of the energy regeneration braking torque and the change amount of the friction braking torque.

In some embodiments, the control unit 1820 may be further configured to: if a vehicle speed is greater than or equal to a threshold vehicle speed and a wheel speed is greater than or equal to a threshold wheel speed, determine the change amount of the energy regeneration braking torque and the change amount of the friction braking torque based on a second preset ratio between the change amount of the energy regeneration braking torque and the change amount of the friction braking torque. The second preset ratio is greater than the first preset ratio.

In some embodiments, the control unit 1820 may be further configured to: if a road adhesion coefficient is greater than or equal to a threshold coefficient, determine the change amount of the energy regeneration braking torque and the change amount of the friction braking torque based on a third preset ratio between the change amount of the energy regeneration braking torque and the change amount of the friction braking torque. The third preset ratio is less than the first preset ratio.

In some embodiments, the braking requirement obtaining unit 1810 may be further configured to obtain the braking-required torque from an anti-lock system (ABS). The control unit 1820 may be further configured to: before the ABS is started, make the energy regeneration braking torque of the wheel less than an upper limit value of the energy regeneration torque.

In some embodiments, the control unit 1820 may be further configured to: in response to emergency braking of the vehicle, increase the friction braking torque of the wheel when the energy regeneration braking torque of the wheel reaches the upper limit value. The control unit 1820 may be further configured to: in response to a decrease in a growth rate of the braking-required torque of the wheel, decrease the energy regeneration braking torque from the upper limit value and continue to increase the friction braking torque. A sum of the energy regeneration braking torque and the friction braking torque is the braking-required torque.

In some embodiments, the upper limit value is determined based on current maximum charging power of a vehicle battery and a current maximum regeneration torque of a motor.

In some embodiments, the control unit 1820 may be further configured to: in response to that the vehicle exits an emergency braking state, decrease the friction braking torque. In some embodiments, the control unit 1820 may be further configured to: after the friction braking torque is decreased to zero, control the energy regeneration braking torque to control braking or coasting of the vehicle.

In some embodiments of the fourth aspect, the control unit 1820 may be further configured to: in response to that a decrement of travel of a brake pedal within preset time is greater than a preset value, travel of a brake pedal is less than preset travel, or an indication of ending of autonomous emergency braking is received, determine that the vehicle exits the emergency braking state.

FIG. 19 is a block diagram of another braking apparatus 1900 according to an embodiment of this application. The braking apparatus 1900 may be implemented in an intelligent brake controller 322 of a vehicle, a drive motor controller 340 of the vehicle, or a vehicle control unit 210 of the vehicle.

The braking apparatus 1900 includes a control unit 1920. The control unit 1920 is configured to: in response to emergency braking of the vehicle, increase a friction braking torque of a wheel when an energy regeneration braking torque of the wheel reaches an upper limit value. The control unit 1920 is further configured to: in response to a decrease in a growth rate of a braking-required torque of the wheel, decrease the energy regeneration braking torque from the upper limit value and continue to increase the friction braking torque. A sum of the energy regeneration braking torque and the friction braking torque is the braking-required torque.

In some embodiments, the control unit 1920 may be configured to determine the upper limit value of the energy regeneration braking torque based on current maximum charging power of a vehicle battery and a current maximum regeneration torque of a motor.

In some embodiments, the control unit 1920 may be further configured to: in response to that an increment of travel of a brake pedal within preset time is greater than a preset value, travel of a brake pedal is greater than or equal to preset travel, or an indication of enabling of autonomous emergency braking is received, determine that the vehicle undergoes emergency braking.

In some embodiments, the control unit 1920 may be further configured to: based on the energy regeneration braking torque of the wheel and an energy regeneration braking torque of another wheel, determine an energy regeneration braking torque executed by the motor. The control unit 1920 may be further configured to: based on the braking-required torque of the wheel and the energy regeneration braking torque executed by the motor, determine the friction braking torque for execution by a friction disc.

In some embodiments, the control unit 1920 may be further configured to determine a preset torque based on at least one of the upper limit value of the energy regeneration braking torque and the braking-required torque, and decrease the energy regeneration braking torque to the preset torque.

In some embodiments, the control unit 1920 may be further configured to: in response to that the vehicle exits emergency braking, decrease the friction braking torque. In some embodiments, the control unit 1920 may be further configured to: after the friction braking torque is decreased to zero, control the energy regeneration braking torque to control braking or coasting of the vehicle.

In some embodiments, the control unit 1920 may be further configured to: in response to the brake pedal and in response to that the travel of the brake pedal is less than the preset travel, or an indication of ending of autonomous emergency braking is received, determine that the vehicle exits an emergency braking state.

In some embodiments, the apparatus 1900 may further include a braking requirement obtaining unit. The braking requirement obtaining unit is configured to: in response to start of an anti-lock system (ABS) of the vehicle, obtain the braking-required torque of the wheel from the ABS. The control unit 1920 may be further configured to determine a change amount of the energy regeneration braking torque and a change amount of the friction braking torque of the wheel based on a change amount of the braking-required torque of the wheel. The change amount of the braking-required torque is a sum of the change amount of the energy regeneration braking torque and the change amount of the friction braking torque.

In some embodiments, the control unit 1920 may be further configured to: if a change rate of the braking-required torque is greater than or equal to a threshold change rate, determine the change amount of the energy regeneration braking torque and the change amount of the friction braking torque based on a first preset ratio between the change amount of the energy regeneration braking torque and the change amount of the friction braking torque.

In some embodiments, the control unit 1920 may be further configured to: if a vehicle speed is greater than or equal to a threshold vehicle speed and a wheel speed is greater than or equal to a threshold wheel speed, determine the change amount of the energy regeneration braking torque and the change amount of the friction braking torque based on a second preset ratio between the change amount of the energy regeneration braking torque and the change amount of the friction braking torque. The second preset ratio is greater than the first preset ratio.

In some embodiments, the control unit 1920 may be further configured to: if a road adhesion coefficient is greater than or equal to a threshold coefficient, determine the change amount of the energy regeneration braking torque and the change amount of the friction braking torque based on a third preset ratio between the change amount of the energy regeneration braking torque and the change amount of the friction braking torque. The third preset ratio is less than the first preset ratio.

With reference to the foregoing descriptions of FIG. 1 to FIG. 19, it can be learned that in some embodiments, a control strategy that conforms to a corresponding actuator is used based on characteristics of friction braking and energy regeneration braking. When a vehicle speed and a wheel speed are high, an energy regeneration priority strategy is used. On a road with a high adhesion coefficient, a friction braking priority strategy is used. When a braking-required torque changes rapidly, two actuators work together for cooperative adjustment. Embodiments of this application are different from a simple cooperation method or direct cancellation of an energy regeneration function in a conventional solution in that energy regeneration is performed in a process in which an ABS intervenes to perform braking, which saves energy and avoids a large amount of heat dissipation in an ABS process. In addition, high hydraulic pressure established inside an integrated booster for ABS control is avoided, which prolongs a life of the integrated booster. According to embodiments of this application, a friction braking actuator and an energy regeneration actuator may be controlled in a cooperative manner, which is different from the conventional solution in that a control response is faster, control effect is better, and vehicle stability is enhanced.

In some embodiments, based on characteristics of the friction braking actuator and the energy regeneration braking actuator, when it is detected that a driver has an intention of emergency braking, entry management is performed on a friction braking-required torque and an energy regeneration-required torque. When it is detected that the driver has an intention to decrease a braking torque or exit braking, exit management is performed on the friction braking-required torque and an energy regeneration torque. Based on this manner, it is ensured that the braking-required torque is equal to the friction braking-required torque plus the energy regeneration-required torque, an actual friction braking torque and an actual energy regeneration braking torque can well keep up with requirements, and characteristics of different actuators are used. This avoids the actual braking torque fluctuating sharply and deviating from the braking-required torque for the driver in processes of entering the ABS and exiting the ABS, and avoids an unexpected deceleration and vehicle instability.

In some embodiments, a dedicated high-speed communication line may be directly set between a drive motor controller and a brake controller, so that a time delay of transmission of a drive motor torque can be reduced, and control effect deterioration and vehicle instability caused by an excessively slow response of the drive motor torque can be avoided.

In some embodiments, when a vehicle is about to stop, a power battery is still charged by using a direct current converter of the drive motor controller to boost a voltage, and even the power battery is allowed to discharge, to maintain output of the energy regeneration torque. In this way, stability of the energy regeneration torque can be maintained, vehicle stability at a low speed can be improved, and the friction braking torque can be prevented from sharply increasing and establishing high pressure inside the integrated booster when the vehicle is at the low speed, which prolongs the mechanical life of the integrated booster.

The solutions provided in this application may be a method, an apparatus, a system, and/or a computer program product. The computer program product may include a computer-readable storage medium, having computer-readable program instructions thereon for performing various aspects of this application.

The computer-readable storage medium may be a tangible device that may retain and store instructions to be used by an instruction execution device. The computer-readable storage medium may be, for example, but is not limited to, an electronic storage device, a magnetic storage device, an optical storage device, an electromagnetic storage device, a semiconductor storage device, or any suitable combination thereof. More specific examples (a non-exhaustive list) of the computer-readable storage medium include: a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanical coding device, for example, a punching card or a groove protrusion structure that stores instructions, and any suitable combination thereof. The computer-readable storage medium used herein is not to be construed as a transient signal, such as a radio wave or another freely propagating electromagnetic wave, an electromagnetic wave propagating through a waveguide or another transmission medium (such as a light pulse through an optical fiber cable), or an electrical signal transmitted through a wire.

The computer-readable program instructions described herein may be downloaded to respective computing/processing devices from the computer-readable storage medium or to an external computer or external storage device via a network, such as the Internet, a local area network, a wide area network and/or a wireless network. The network may include a copper transmission cable, optical fiber transmission, wireless transmission, a router, a firewall, a switch, a gateway computer and/or an edge server. A network adapter card or network interface in each computing/processing device receives the computer-readable program instructions from the network and forwards the computer-readable program instructions for storage in a computer-readable storage medium in each computing/processing device.

The computer program instructions used to perform operations in this application may be assembly instructions, instruction set architecture (ISA) instructions, machine instructions, machine-related instructions, microcode, firmware instructions, status setting data, or source code or target code written in one or any combination of more programming languages. The programming languages include object-oriented programming languages such as Smalltalk and C++, and a conventional procedural programming language such as "C" or a similar programming language. The computer-readable program instructions may be executed entirely on a user computer, partly on the user computer, as a stand-alone software package, partly on the user computer and partly on a remote computer, or entirely on the remote computer or a server. When a remote computer is involved, the remote computer may be connected to a user computer through any type of network, including a local area network (LAN) or a wide area network (WAN), or may be connected to an external computer (for example, connected by using an Internet service provider through the Internet). In some embodiments, an electronic circuit, for example, a programmable logic circuit, a field programmable gate array (FPGA), or a programmable logic array (PLA), is customized by using status information of the computer-readable program instructions. The electronic circuit may execute the computer-readable program instructions, to implement the various aspects of this application.

The various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented by the computer-readable program instructions.

These computer-readable program instructions may be provided to a processing unit of a general-purpose computer, a dedicated computer, or another programmable data processing apparatus to produce a machine, so that the instructions, when executed by the processing unit of the computer or the another programmable data processing apparatus, create an apparatus for implementing functions/acts specified in one or more blocks in the flowcharts and/or block diagrams. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing the various aspects of the functions/acts specified in the one or more blocks in the flowcharts and/or block diagrams.

The computer-readable program instructions may alternatively be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implement the functions/acts specified in the one or more blocks in the flowcharts and/or block diagrams.

The flowcharts and block diagrams in the accompanying drawings show system architectures, functions, and operations of possible implementations of systems, methods, and computer program products according to a plurality of embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, a function marked in the block may alternatively occur in an order different from that marked in the accompanying drawings. For example, two consecutive blocks may actually be executed substantially in parallel, and may sometimes be executed in a reverse order, depending on a function involved. It should also be noted that each block in the block diagrams and/or flowcharts, and the combination of the blocks in the block diagrams and/or flowcharts may be implemented by a dedicated hardware-based system that performs a specified function or action, or may be implemented by a combination of dedicated hardware and computer instructions.

Implementations of this application are described above. The foregoing descriptions are examples, not exhaustive, and not limited to the foregoing disclosed implementations. Many modifications and variations are apparent to a person of ordinary skill in the art without departing from the scope and spirit of the described implementations. Selection of terms used in this specification is intended to best explain implementation principles, actual application or improvements to technologies in the market, or to enable another person of ordinary skill in the art to understand the implementations disclosed in this specification.

## Claims

1. A braking method, comprises:
obtaining a braking-required torque of a wheel; and
determining a change amount of an energy regeneration braking torque and a change amount of a friction braking torque of the wheel based on a change amount of the braking-required torque of the wheel, wherein the change amount of the braking-required torque is a sum of the change amount of the energy regeneration braking torque and the change amount of the friction braking torque.

2. The method according to claim 1, wherein the determining a change amount of an energy regeneration braking torque and a change amount of a friction braking torque of the wheel comprises:
if a change rate of the braking-required torque is greater than or equal to a threshold change rate, determining the change amount of the energy regeneration braking torque and the change amount of the friction braking torque based on a first preset ratio between the change amount of the energy regeneration braking torque and the change amount of the friction braking torque.

3. The method according to claim 1 or 2, wherein the determining a change amount of an energy regeneration braking torque and a change amount of a friction braking torque of the wheel comprises:
if a vehicle speed is greater than or equal to a threshold vehicle speed and a wheel speed is greater than or equal to a threshold wheel speed, determining the change amount of the energy regeneration braking torque and the change amount of the friction braking torque based on a second preset ratio between the change amount of the energy regeneration braking torque and the change amount of the friction braking torque, wherein the second preset ratio is greater than the first preset ratio.

4. The method according to any one of claims 1 to 3, wherein the determining a change amount of an energy regeneration braking torque and a change amount of a friction braking torque of the wheel comprises:
if a road adhesion coefficient is greater than or equal to a threshold coefficient, determining the change amount of the energy regeneration braking torque and the change amount of the friction braking torque based on a third preset ratio between the change amount of the energy regeneration braking torque and the change amount of the friction braking torque, wherein the third preset ratio is less than the first preset ratio.

5. The method according to claim 1, wherein the obtaining a braking-required torque of a wheel comprises obtaining the braking-required torque from an anti-lock system (ABS), and the method further comprises:
before the ABS is started, making the energy regeneration braking torque of the wheel less than an upper limit value of the energy regeneration torque.

6. The method according to claim 5, wherein the making the energy regeneration braking torque of the wheel less than an upper limit value of the energy regeneration torque comprises: in response to emergency braking of a vehicle,
increasing the friction braking torque of the wheel when the energy regeneration braking torque of the wheel reaches the upper limit value; and
in response to a decrease in a growth rate of the braking-required torque of the wheel,
decreasing the energy regeneration braking torque from the upper limit value and continuing to increase the friction braking torque, wherein a sum of the energy regeneration braking torque and the friction braking torque is the braking-required torque.

7. The method according to claim 5, wherein the upper limit value is determined based on current maximum charging power of a vehicle battery and a current maximum regeneration torque of a motor.

8. The method according to any one of claims 1 to 7, further comprising: in response to that the vehicle exits an emergency braking state,
decreasing the friction braking torque.

9. The method according to claim 8, further comprising:
after the friction braking torque is decreased to zero, controlling the energy regeneration braking torque to control braking or coasting of the vehicle.

10. The method according to claim 8 or 9, further comprising: in response to that a decrement of travel of a brake pedal within preset time is greater than a preset value, travel of a brake pedal is less than preset travel, or an indication of ending of autonomous emergency braking is received, determining that the vehicle exits the emergency braking state.

11. A braking method, comprising: in response to emergency braking of a vehicle,
increasing a friction braking torque of a wheel when an energy regeneration braking torque of the wheel reaches an upper limit value; and
in response to a decrease in a growth rate of a braking-required torque of the wheel,
decreasing the energy regeneration braking torque from the upper limit value and continuing to increase the friction braking torque, wherein a sum of the energy regeneration braking torque and the friction braking torque is the braking-required torque.

12. The method according to claim 11, further comprising:
determining the upper limit value of the energy regeneration braking torque based on current maximum charging power of a vehicle battery and a current maximum regeneration torque of a motor.

13. The method according to claim 11 or 12, further comprising: in response to that an increment of travel of a brake pedal within preset time is greater than a preset value, travel of a brake pedal is greater than or equal to preset travel, or an indication of enabling of autonomous emergency braking is received, determining that the vehicle undergoes emergency braking.

14. The method according to any one of claims 11 to 13, further comprising:
based on the energy regeneration braking torque of the wheel and an energy regeneration braking torque of another wheel, determining an energy regeneration braking torque executed by the motor; and
based on the braking-required torque of the wheel and the energy regeneration braking torque executed by the motor, determining the friction braking torque for execution by a friction disc.

15. The method according to any one of claims 11 to 14, wherein decreasing the energy regeneration braking torque comprises:
decreasing the energy regeneration braking torque to a preset torque, wherein the preset torque is determined based on at least one of the upper limit value of the energy regeneration braking torque and the braking-required torque.

16. The method according to any one of claims 11 to 15, further comprising: in response to that the vehicle exits emergency braking,
decreasing the friction braking torque.

17. The method according to claim 16, further comprising:
after the friction braking torque is decreased to zero, controlling the energy regeneration braking torque to control braking or coasting of the vehicle.

18. The method according to claim 16 or 17, further comprising: in response to that a decrement of the travel of the brake pedal within the preset time is greater than the preset value, the travel of the brake pedal is less than the preset travel, or an indication of ending of autonomous emergency braking is received, determining that the vehicle exits an emergency braking state.

19. The method according to claim 11, further comprising: in response to start of an anti-lock system (ABS) of the vehicle,
obtaining the braking-required torque of the wheel from the ABS; and
determining a change amount of the energy regeneration braking torque and a change amount of the friction braking torque of the wheel based on a change amount of the braking-required torque of the wheel, wherein the change amount of the braking-required torque is a sum of the change amount of the energy regeneration braking torque and the change amount of the friction braking torque.

20. The method according to claim 19, wherein the determining a change amount of the energy regeneration braking torque and a change amount of the friction braking torque of the wheel comprises:
if a change rate of the braking-required torque is greater than or equal to a threshold change rate, determining the change amount of the energy regeneration braking torque and the change amount of the friction braking torque based on a first preset ratio between the change amount of the energy regeneration braking torque and the change amount of the friction braking torque.

21. The method according to claim 19 or 20, wherein the determining a change amount of the energy regeneration braking torque and a change amount of the friction braking torque of the wheel comprises:
if a vehicle speed is greater than or equal to a threshold vehicle speed and a wheel speed is greater than or equal to a threshold wheel speed, determining the change amount of the energy regeneration braking torque and the change amount of the friction braking torque based on a second preset ratio between the change amount of the energy regeneration braking torque and the change amount of the friction braking torque, wherein the second preset ratio is greater than the first preset ratio.

22. The method according to any one of claims 19 to 21, wherein the determining a change amount of the energy regeneration braking torque and a change amount of the friction braking torque of the wheel comprises:
if a road adhesion coefficient is greater than or equal to a threshold coefficient, determining the change amount of the energy regeneration braking torque and the change amount of the friction braking torque based on a third preset ratio between the change amount of the energy regeneration braking torque and the change amount of the friction braking torque, wherein the third preset ratio is less than the first preset ratio.

23. An electronic device, comprising:
at least one processing unit; and
at least one memory, wherein the at least one memory is coupled to the at least one processing unit and stores instructions to be executed by the at least one processing unit; and when the instructions are executed by the at least one processing unit, the device is enabled to perform the method according to any one of claims 1 to 10 or claims 11 to 22.

24. A braking apparatus, comprising:
a braking requirement obtaining unit, configured to obtain a braking-required torque of a wheel; and
a control unit, configured to determine a change amount of an energy regeneration braking torque and a change amount of a friction braking torque of the wheel based on a change amount of the braking-required torque of the wheel, wherein the change amount of the braking-required torque is a sum of the change amount of the energy regeneration braking torque and the change amount of the friction braking torque.

25. A braking apparatus, comprising:
a control unit, configured to: in response to emergency braking of a vehicle, increase a friction braking torque of a wheel when an energy regeneration braking torque of the wheel reaches an upper limit value, wherein
the control unit is further configured to: in response to a decrease in a growth rate of a braking-required torque of the wheel, decrease the energy regeneration braking torque from the upper limit value and continue to increase the friction braking torque, wherein a sum of the energy regeneration braking torque and the friction braking torque is the braking-required torque.

26. A vehicle, comprising the apparatus according to any one of claims 24 or 25.

27. A computer-readable storage medium, wherein the computer-readable storage medium stores a computer program; and when the computer program is executed by a processor, the method according to any one of claims 1 to 10 or claims 11 to 22 is implemented.

28. A computer program product, comprising computer-executable instructions, wherein when the computer-executable instructions are executed by a processor, the method according to any one of claims 1 to 10 or claims 11 to 22 is performed.
